# EUROPEAN PATENT APPLICATION

(11) **EP 3 477 455 A2**
(43) Date of publication of application: **01.05.2019**
(21) Application number: 17831196.5
(22) Date of filing: 28.04.2017
(51) Int. Cl.: G06F 3/0488, G06F 3/041, H04M 1/725

(54) **USER INTERFACE PROVIDING METHOD USING PRESSURE INPUT AND ELECTRONIC DEVICE IMPLEMENTING SAME**

(30) Priority: 18.07.2016 KR 20160090679
(71) Applicant: Samsung Electronics Co., Ltd., Suwon-si, Gyeonggi-do 16677 (KR)
(72) Inventor: KIM, Kyuhong, Yongin-si Gyeonggi-do 16931 (KR); KIM, Geon-Soo, Suwon-si Gyeonggi-do 16663 (KR); KIM, Soyoung, Suwon-si Gyeonggi-do 16688 (KR); CHOI, Seung-Min, Seongnam-si Gyeonggi-do 13555 (KR); KANG, Doo-Suk, Suwon-si Gyeonggi-do 16664 (KR); LEE, Yo-Han, Seongnam-si Gyeonggi-do 13611 (KR); CHOI, Bokun, Seoul 08090 (KR)
(74) Representative: HGF Limited
(86) International application number: PCT/KR2017/004542
(87) International publication number: WO 2018/016722

(57) **Abstract**

Various embodiments provide an electronic device and a method therefor, the electronic device comprising a memory for storing instructions which, when executed, cause a processor to: display a user interface on a display; receive, from a touch sensor, first data indicating that an external object touches a part of the display; receive, from a pressure sensor, second data indicating the pressure applied against the display by the external object while the external object touches a part of the display; determine at least one application on the basis of at least a part of the first data; determine a change in the direction of the pressure applied against the display by the external object, on the basis of at least a part of the first data or the second data, wherein the direction is perpendicular to a first direction; and select a function associated with the at least one application on the basis of at least a part of the change, and perform the selected function. Other embodiments are also possible.

## Description

### Technical Field

Various embodiments relate to a method and an apparatus for providing a user interface by using a force input.

### Background Art

With the recent enhancement of digital technology, various types of electronic devices such as mobile communication terminals, personal digital assistants (PDAs), electronic schedulers, smart phones, tablet personal computers (PCs), wearable devices, or the like are widely used. Hardware parts and/or software parts of such electronic devices are continuously developing to support and increase functions of the electronic devices. For example, a related-art electronic device has a display region (for example, a liquid crystal display (LCD), a touch screen) formed on a front surface thereof, whereas a recent electronic device has a display region formed on a side surface thereof in addition to the front surface display region.

In addition, an electronic device receives a touch input by using a touch screen provided on a display region, and provides a user interface corresponding to the touch input. A recent electronic device may be provided with a force sensor along with a touch screen, and may detect a force input by using the force sensor and provide a user interface corresponding to the force input.

### Disclosure of Invention

### Technical Problem

Various embodiments provide a method and an apparatus for providing various user interfaces corresponding to a force input.

Various embodiments provide a method and an apparatus for enhancing usability of an electronic device by providing an intuitive user interface or a user experience according to a characteristic of a force input.

### Solution to Problem

According to various embodiments, an electronic device may include: a housing including a first surface facing a first direction, and a second surface facing a second direction opposite the first direction; a display arranged between the first surface and the second surface, and exposed through the first surface; a touch sensor arranged between the first surface and the second surface to detect a point of at least one touch by an external object on the display; a force sensor arranged between the first surface and the second surface to detect a force applied against the display by the external object; at least one processor electrically connected with the display, the touch sensor, and the force sensor; and a memory electrically connected with the processor and configured to store a plurality of application programs including a plurality of functions, respectively. The memory may store instructions that, when executed, cause the processor to display a user interface on the display, to receive, from the touch sensor, first data indicating that the external object touches a part of the display, to receive, from the force sensor, second data indicating a force applied against the display by the external object while the external object is touching a part of the display, to determine at least one application based at least in part on the first data, to determine a change of a direction of the force applied against the display by the external object, based on at least part of the first data or the second data, the direction being perpendicular to the first direction, to select a function associated with the at least one application based on at least part of the change, and to perform the selected function.

According to various embodiments, an electronic device may include: a housing including a first surface facing a first direction, and a second surface facing a second direction opposite the first direction; a display arranged between the first surface and the second surface, and exposed through the first surface; a touch sensor arranged between the first surface and the second surface to detect a point of at least one touch by an external object on the display; a force sensor arranged between the first surface and the second surface to detect a force applied against the display by the external object; at least one processor electrically connected with the display, the touch sensor, and the force sensor; and a memory electrically connected with the processor and configured to store a plurality of application programs including a plurality of functions, respectively. The memory may store instructions that, when executed, cause the processor to display a user interface on the display, to receive, from the touch sensor, first data indicating that the external object touches a part of the display, to receive, from the force sensor, second data indicating a force applied against the display by the external object while the external object is touching a part of the display, to determine a first function based on at least part of the first data, to determine a change of a direction of the force applied against the display by the external object, based on at least part of the first data or the second data, the direction being perpendicular to the first direction, to select a second function associated with the first function based on at least part of the change, and to perform the selected function.

According to various embodiments, an electronic device may include: a housing including a first surface facing a first direction, and a second surface facing a second direction opposite the first direction; a display arranged between the first surface and the second surface, and exposed through the first surface; a touch sensor arranged between the first surface and the second surface to detect a point of at least one touch by an external object on the display; a force sensor arranged between the first surface and the second surface to detect a force applied against the display by the external object; at least one processor electrically connected with the display, the touch sensor, and the force sensor; and a memory electrically connected with the processor and configured to store a plurality of application programs including a plurality of functions, respectively. The memory may store instructions that, when executed, cause the processor to display a user interface on the display, to receive, from the touch sensor, first data indicating that the external object touches a part of the display, to receive, from the force sensor, second data indicating a force applied against the display by the external object while the external object is touching a part of the display, to determine a first function associated with the at least one application based on at least part of the second data, to determine a change of a direction of the force applied against the display by the external object, based on at least part of the first data or the second data, the direction being perpendicular to the first direction, to select a second function associated with the application based on at least part of the change, and to perform the selected function.

According to various embodiments, an electronic device may include: a housing including a first surface facing a first direction, and a second surface facing a second direction opposite the first direction; a display arranged between the first surface and the second surface, and exposed through the first surface; a touch sensor arranged between the first surface and the second surface to detect a point of at least one touch by an external object on the display; a force sensor arranged between the first surface and the second surface to detect a force applied against the display by the external object; at least one processor electrically connected with the display, the touch sensor, and the force sensor; and a memory electrically connected with the processor and configured to store a plurality of application programs including a plurality of functions, respectively. The memory may store instructions that, when executed, cause the processor to display a user interface on the display, to receive, from the touch sensor, first data indicating that the external object touches a part of the display, to receive, from the force sensor, second data indicating a force applied against the display by the external object while the external object is touching a part of the display, to determine a first function based on at least part of the second data, to determine a change of a direction of the force applied against the display by the external object, based on at least part of the first data or the second data, the direction being perpendicular to the first direction, to select a second function associated with the first function based on at least part of the change, and to perform the selected second function.

According to various embodiments, an operating method of an electronic device including a touch sensor and a force sensor may include: detecting a force input while detecting a touch input; monitoring an amount of change of the force input; detecting a change of an input based on the amount of change; when the change of the input is detected, operating in a force change processing mode; and displaying a user interface associated with the force change processing mode.

### Advantageous Effects of Invention

According to various embodiments, various user interfaces corresponding to a force input can be provided.

According to various embodiments, usability of an electronic device can be enhanced by providing an intuitive user interface or a user experience according to a characteristic of a force input.

According to various embodiments, user convenience can be enhanced by executing various functions based on a change of a force input detected while a touch input is being held, in comparison to a related-art method which should go through several steps to perform a function.

### Brief Description of Drawings

FIG. 1 is a view illustrating an electronic device in a network environment according to various embodiments;
FIG. 2 is a block diagram illustrating a configuration of an electronic device according to various embodiments;
FIG. 3 is a block diagram illustrating a program module according to various embodiments;
FIG. 4 is a view illustrating a structure of an electronic device according to various embodiments;
FIG. 5 is a view illustrating a hardware configuration of an electronic device according to various embodiments;
FIG. 6 is a flowchart illustrating a method for operating in a force change processing mode in the electronic device according to various embodiments;
FIG. 7 is a view illustrating an example of recognizing a force change processing mode according to various embodiments;
FIG. 8 is a view illustrating an example of detecting a user input according to time according to various embodiments;
FIGs. 9A and 9B are views illustrating an example of detecting a user input in a touch sensor and a force sensor according to various embodiments;
FIG. 10 is a flowchart illustrating an operating method in the electronic device according to various embodiments;
FIGs. 11A and 11B are views illustrating an example of controlling a user interface according to the operating method of FIG. 10;
FIG. 12 is a flowchart illustrating a method for providing a user interface in the electronic device according to various embodiments;
FIGs. 13A and 13B are views illustrating an example of controlling a user interface according to the operating method of FIG. 12;
FIG. 14 is a flowchart illustrating a method for providing a user interface in the electronic device according to various embodiments;
FIG. 15 is a view illustrating an example of controlling a user interface according to the operating method of FIG. 14;
FIG. 16 is a flowchart illustrating a method for providing a user interface in the electronic device according to various embodiments;
FIG. 17 is a view illustrating an example of controlling a user interface according to the operating method of FIG. 16;
FIG. 18 is a flowchart illustrating a method for providing a user interface in the electronic device according to various embodiments;
FIG. 19 is a view illustrating an example of controlling a user interface according to the operating method of FIG. 18;
FIG. 20 is a flowchart illustrating a method for providing a user interface in the electronic device according to various embodiments; and
FIG. 21 is a view illustrating an example of controlling a user interface according to the operating method of FIG. 20.

### Best Mode for Carrying out the Invention

Hereinafter, various example embodiments of the present disclosure will be described with reference to the accompanying drawings. However, it should be understood that there is no intent to limit the present disclosure to the particular forms disclosed herein; rather, the present disclosure should be understood to cover various modifications, equivalents, and/or alternatives of embodiments of the present disclosure. In describing the drawings, similar reference numerals may be used to designate similar constituent elements. In the present disclosure, the expression "A or B", "at least one of A or/and B", or "one or more of A or/and B" may include all possible combinations of the items listed. The expression "a first", "a second", "the first", or "the second" used in various embodiments of the present disclosure may modify various components regardless of the order and/or the importance but does not limit the corresponding components. It should be understood that when an element (e.g., first element) is referred to as being (operatively or communicatively) "connected," or "coupled," to another element (e.g., second element), it may be directly connected or coupled directly to the other element or any other element (e.g., third element) may be interposed between them.

The expression "configured to" used in the present disclosure may be used interchangeably with, for example, "suitable for", "having the capacity to", "designed to", "adapted to", "made to", or "capable of' according to the situation. Alternatively, in some situations, the expression "device configured to" may refer to a situation in which the device, together with other devices or components, "is able to". For example, the phrase "processor adapted (or configured) to perform A, B, and C" may refer, for example, to a dedicated processor (e.g. embedded processor) for performing the corresponding operations or a generic-purpose processor (e.g., central processing unit (CPU) or application processor (AP)) that can perform the corresponding operations by executing one or more software programs stored in a memory device.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, or a wearable device, but is not limited thereto. The wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit). According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSyncTM, Apple TVTM, or Google TVTM), a game console (e.g., XboxTM and PlayStationTM), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyrocompass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. The electronic device according to an embodiment of the present disclosure is not limited to the aforementioned devices. As used herein, the term "user" may indicate a person who uses an electronic device or a device (e.g., an artificial intelligence electronic device) that uses an electronic device.

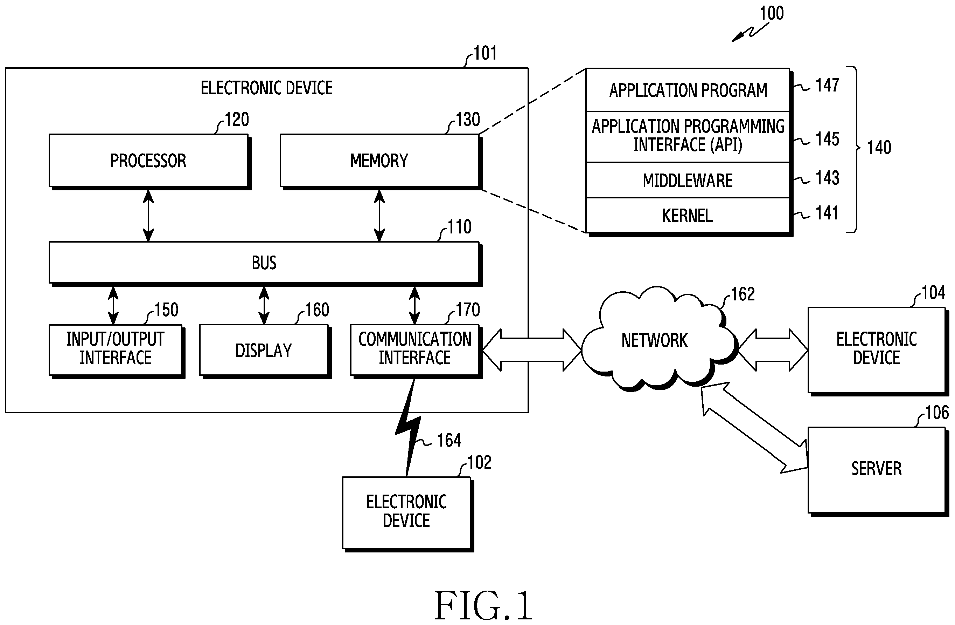

FIG. 1 is a diagram illustrating an example network environment including an example electronic device according to various example embodiments of the present disclosure.

The electronic device 101 may include a bus 110, a processor (e.g., including processing circuitry) 120, a memory 130, an input/output interface (e.g., including interface circuitry) 150, a display 160, and a communication interface (e.g., including communication circuitry) 170. According to an embodiment of the present disclosure, the electronic device 101 may omit at least one of the above components or may further include other components.

The bus 110 may include, for example, a circuit which interconnects the components 110 to 170 and delivers a communication (e.g., a control message and/or data) between the components 110 to 170.

The processor 120 may include various processing circuitry, such as, for example, and without limitation, one or more of a dedicated processor, a Central Processing Unit (CPU), an Application Processor (AP), and a Communication Processor (CP). The processor 120 may carry out, for example, calculation or data processing relating to control and/or communication of at least one other component of the electronic device 101.

The memory 130 may include a volatile memory and/or a non-volatile memory. The memory 130 may store, for example, commands or data relevant to at least one other component of the electronic device 101. According to an embodiment of the present disclosure, the memory 130 may store software and/or a program 140. The program 140 may include, for example, a kernel 141, middleware 143, an Application Programming Interface (API) 145, and/or application programs (or "applications") 147.

At least some of the kernel 141, the middleware 143, and the API 145 may be referred to as an Operating System (OS). The kernel 141 may control or manage system resources (e.g., the bus 110, the processor 120, or the memory 130) used for performing an operation or function implemented in the other programs (e.g., the middleware 143, the API 145, or the application programs 147). Furthermore, the kernel 141 may provide an interface through which the middleware 143, the API 145, or the application programs 147 may access the individual components of the electronic device 101 to control or manage the system resources.

The middleware 143, for example, may serve as an intermediary for allowing the API 145 or the application programs 147 to communicate with the kernel 141 to exchange data. Also, the middleware 143 may process one or more task requests received from the application programs 147 according to priorities thereof. For example, the middleware 143 may assign priorities for using the system resources (e.g., the bus 110, the processor 120, the memory 130, or the like) of the electronic device 101, to at least one of the application programs 147. For example, the middleware 143 may perform scheduling or loading balancing on the one or more task requests by processing the one or more task requests according to the priorities assigned thereto. The API 145 is an interface through which the applications 147 control functions provided from the kernel 141 or the middleware 143, and may include, for example, at least one interface or function (e.g., instruction) for file control, window control, image processing, character control, and the like. The input/output interface 150, for example, may include various interface circuitry and function as an interface that may transfer commands or data input from a user or another external device to the other element(s) of the electronic device 101. Furthermore, the input/output interface 150 may output the commands or data received from the other element(s) of the electronic device 101 to the user or another external device.

Examples of the display 160 may include a Liquid Crystal Display (LCD), a Light-Emitting Diode (LED) display, an Organic Light-Emitting Diode (OLED) display, a MicroElectroMechanical Systems (MEMS) display, or an electronic paper display. The display 160 may display, for example, various types of contents (e.g., text, images, videos, icons, or symbols) to users. The display 160 may include a touch screen, and may receive, for example, a touch, gesture, proximity, or hovering input using an electronic pen or a user's body part.

The communication interface 170 may include various communication circuitry and establish communication, for example, between the electronic device 101 and an external device (e.g., a first external electronic device 102, a second external electronic device 104, or a server 106). For example, the communication interface 170 may be connected to a network 162 through wireless or wired communication, and may communicate with an external device (e.g., the second external electronic device 104 or the server 106). The wireless communication may use at least one of, for example, Long Term Evolution (LTE), LTE-Advance (LTE-A), Code Division Multiple Access (CDMA), Wideband CDMA (WCDMA), Universal Mobile Telecommunications System (UMTS), Wireless Broadband (WiBro), and Global System for Mobile Communications (GSM), as a cellular communication protocol. According to some embodiments, the wireless communication may include at least one of, for example, wireless fidelity (Wi-Fi) Bluetooth, Bluetooth low energy (BLE) Zigbee, near field communication (NFC), magnetic secure transmission, radio frequency (RF) or body area network (BAN).

According to some embodiments, the wireless communication may include GNSS. GNSS may include, for example, at least one of global positioning system (GPS), global navigation satellite system (Glonass), Beidou Navigation satellite system (Beidou) orthe European global satellite-based navigation system, Galileo. Hereinafter, in the present disclosure, the "GPS" may be interchangeably used with the "GNSS". The wired communication may include, for example, at least one of a Universal Serial Bus (USB), a High Definition Multimedia Interface (HDMI), Recommended Standard 232 (RS-232), and a Plain Old Telephone Service (POTS). The network 162 may include at least one of a telecommunication network such as a computer network (e.g., a LAN or a WAN), the Internet, and a telephone network.

Each of the first and second external electronic devices 102 and 104 may be of a type identical to or different from that of the electronic device 101.

According to various example embodiments of the present disclosure, all or some of the operations performed in the electronic device 101 may be executed in another electronic device or a plurality of electronic devices (e.g., the electronic devices 102 and104 or the server 106). According to an embodiment of the present disclosure, when the electronic device 101 has to perform some functions or services automatically or in response to a request, the electronic device 101 may request another device (e.g., the electronic device 102 or 104 or the server 106) to execute at least some functions relating thereto instead of or in addition to autonomously performing the functions or services. Another electronic device (e.g., the electronic device 102 or 104, or the server 106) may execute the requested functions or the additional functions, and may deliver a result of the execution to the electronic device 101. The electronic device 101 may process the received result as it is or additionally, and may provide the requested functions or services. To this end, for example, cloud computing, distributed computing, or client-server computing technologies may be used.

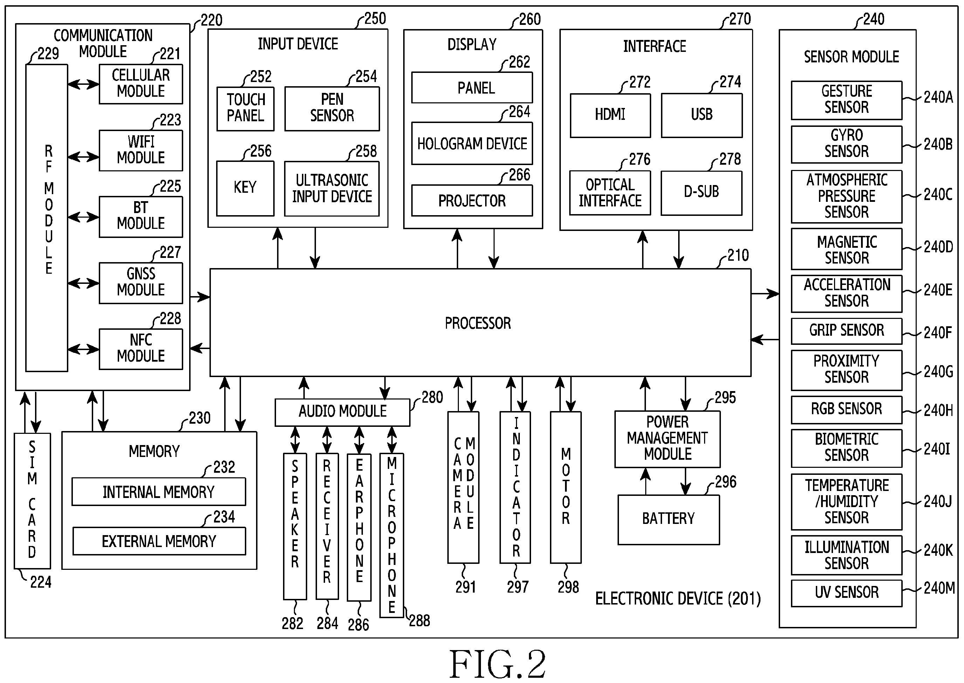

FIG. 2 is a block diagram illustrating an example electronic device according to various example embodiments of the present disclosure.

The electronic device 201 may include, for example, all or a part of the electronic device 101 illustrated in FIG. 1. The electronic device 201 may include one or more processors (e.g., including processing circuitry) 210 (e.g., Application Processors (AP)), a communication module (e.g., including communication circuitry) 220, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The processor 210 may include various processing circuitry and control a plurality of hardware or software components connected to the processor 210 by driving an operating system or an application program, and perform processing of various pieces of data and calculations. The processor 210 may be embodied as, for example, a System on Chip (SoC). According to an embodiment of the present disclosure, the processor 210 may further include a Graphic Processing Unit (GPU) and/or an image signal processor. The processor 210 may include at least some (for example, a cellular module 221) of the components illustrated in FIG. 2. The processor 210 may load, into a volatile memory, commands or data received from at least one (e.g., a non-volatile memory) of the other components and may process the loaded commands or data, and may store various data in a non-volatile memory.

The communication module 220 may have a configuration equal or similar to that of the communication interface 170 of FIG. 1. The communication module 220 may include various communication circuitry, such as, for example, and without limitation, a cellular module 221, a Wi-Fi module 223, a BT module 225, a GNSS module 227, an NFC module 228, and a Radio Frequency (RF) module 229. The cellular module 221, for example, may provide a voice call, a video call, a text message service, or an Internet service through a communication network. According to an embodiment of the present disclosure, the cellular module 221 may distinguish and authenticate the electronic device 201 in a communication network using a subscriber identification module 224 (for example, the SIM card). According to an embodiment of the present disclosure, the cellular module 221 may perform at least some of the functions that the AP 210 may provide. According to an embodiment of the present disclosure, the cellular module 221 may include a communication processor (CP).

According to an embodiment of the present disclosure, at least some (e.g., two or more) of the cellular module 221, the Wi-Fi module 223, the BT module 225, the GNSS module 227, and the NFC module 228 may be included in one Integrated Chip (IC) or IC package. The RF module 229, for example, may transmit/receive a communication signal (e.g., an RF signal). The RF module 229 may include, for example, a transceiver, a Power Amplifier Module (PAM), a frequency filter, a Low Noise Amplifier (LNA), and an antenna. According to another embodiment of the present disclosure, at least one of the cellular module 221, the WIFI module 223, the BT module 225, the GNSS module 227, and the NFC module 228 may transmit/receive an RF signal through a separate RF module. The subscriber identification module 224 may include, for example, a card including a subscriber identity module and/or an embedded SIM, and may contain unique identification information (e.g., an Integrated Circuit Card Identifier (ICCID)) or subscriber information (e.g., an International Mobile Subscriber Identity (IMSI)).

The memory 230 (e.g., the memory 130) may include, for example, an embedded memory 232 and/or an external memory 234. The embedded memory 232 may include at least one of a volatile memory (e.g., a Dynamic Random Access Memory (DRAM), a Static RAM (SRAM), a Synchronous Dynamic RAM (SDRAM), and the like) and a non-volatile memory (e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory, a hard disc drive, a Solid State Drive (SSD)). The external memory 234 may further include a flash drive, for example, a Compact Flash (CF), a Secure Digital (SD), a Micro Secure Digital (Micro-SD), a Mini Secure Digital (Mini-SD), an eXtreme Digital (xD), a MultiMediaCard (MMC), a memory stick, or the like. The external memory 234 may be functionally and/or physically connected to the electronic device 201 through various interfaces.

The sensor module 240, for example, may measure a physical quantity or detect an operation state of the electronic device 201, and may convert the measured or detected information into an electrical signal. The sensor module 240 may include, for example, at least one of a gesture sensor 240A, a gyro sensor 240B, an atmospheric pressure sensor (barometer) 240C, a magnetic sensor 240D, an acceleration sensor 240E, a grip sensor 240F, a proximity sensor 240G, a color sensor 240H (e.g., red, green, and blue (RGB) sensor), a biometric sensor (medical sensor) 2401, a temperature/humidity sensor 240J, an illuminance (e.g., light) sensor 240K, and a Ultra Violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an Infrared (IR) sensor, an iris scan sensor, and/or a finger scan sensor. The sensor module 240 may further include a control circuit for controlling one or more sensors included therein. According to an embodiment of the present disclosure, the electronic device 201 may further include a processor configured to control the sensor module 240, as a part of the processor 210 or separately from the processor 210, and may control the sensor module 240 while the processor 210 is in a sleep state.

The input device 250 may include various input circuitry, such as, for example, and without limitation, a touch panel 252, a (digital) pen sensor 254, a key 256, or an ultrasonic input device 258. The touch panel 252 may use, for example, at least one of a capacitive type, a resistive type, an infrared type, and an ultrasonic type. The touch panel 252 may further include a control circuit. The touch panel 252 may further include a tactile layer, and provide a tactile reaction to the user. The (digital) pen sensor 254 may include, for example, a recognition sheet which is a part of the touch panel or is separated from the touch panel. The key 256 may include, for example, a physical button, an optical key or a keypad. The ultrasonic input device 258 may detect, through a microphone (e.g., the microphone 288), ultrasonic waves generated by an input tool, and identify data corresponding to the detected ultrasonic waves.

The display 260 (e.g., the display 160) may include a panel 262, a hologram device 264, a projector 266 and/or a control circuitry for controlling the same. The panel 262 may be implemented to be, for example, flexible, transparent, or wearable. The panel 262 may be embodied as a single module with the touch panel 252. According to an embodiment, the panel 262 may include a pressure sensor (or force sensor) capable of obtaining pressure information on a user's touch (e.g., pressure coordinates and the intensity of pressure). The pressure sensor may be implemented integrally with the touch panel 252, or may be implemented using one or more sensors separately from the touch panel 252.

The hologram device 264 may show a three dimensional (3D) image in the air by using an interference of light. The projector 266 may project light onto a screen to display an image. The screen may be located, for example, in the interior of or on the exterior of the electronic device 201. The interface 270 may include various interface circuitry, such as, for example, and without limitation, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280, for example, may bilaterally convert a sound and an electrical signal. At least some components of the audio module 280 may be included in, for example, the input/output interface 150 illustrated in FIG. 1. The audio module 280 may process voice information input or output through, for example, a speaker 282, a receiver 284, earphones 286, or the microphone 288. The camera module 291 is, for example, a device which may photograph a still image and a video. According to an embodiment of the present disclosure, the camera module 291 may include one or more image sensors (e.g., a front sensor or a back sensor), a lens, an Image Signal Processor (ISP) or a flash (e.g., LED or xenon lamp).

The power management module 295 may manage, for example, power of the electronic device 201. According to an embodiment of the present disclosure, the power management module 295 may include a Power Management Integrated Circuit (PMIC), a charger Integrated Circuit (IC), or a battery or fuel gauge. The PMIC may use a wired and/or wireless charging method. Examples of the wireless charging method may include, for example, a magnetic resonance method, a magnetic induction method, an electromagnetic wave method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature while charging. The battery 296 may include, for example, a rechargeable battery and/or a solar battery.

The indicator 297 may display a particular state (e.g., a booting state, a message state, a charging state, or the like) of the electronic device 201 or a part (e.g., the processor 210) of the electronic device 201. The motor 298 may convert an electrical signal into a mechanical vibration, and may generate a vibration, a haptic effect, or the like. Although not illustrated, the electronic device 201 may include a processing device (e.g., a GPU) for supporting a mobile TV. The processing device for supporting a mobile TV may process, for example, media data according to a certain standard such as Digital Multimedia Broadcasting (DMB), Digital Video Broadcasting (DVB), or mediaFLOTM. Each of the above-described component elements of hardware according to the present disclosure may be configured with one or more components, and the names of the corresponding component elements may vary based on the type of electronic device. In various embodiments, the electronic device may include at least one of the above-described elements. Some of the above-described elements may be omitted from the electronic device, or the electronic device may further include additional elements. Also, some of the hardware components according to various embodiments may be combined into one entity, which may perform functions identical to those of the relevant components before the combination.

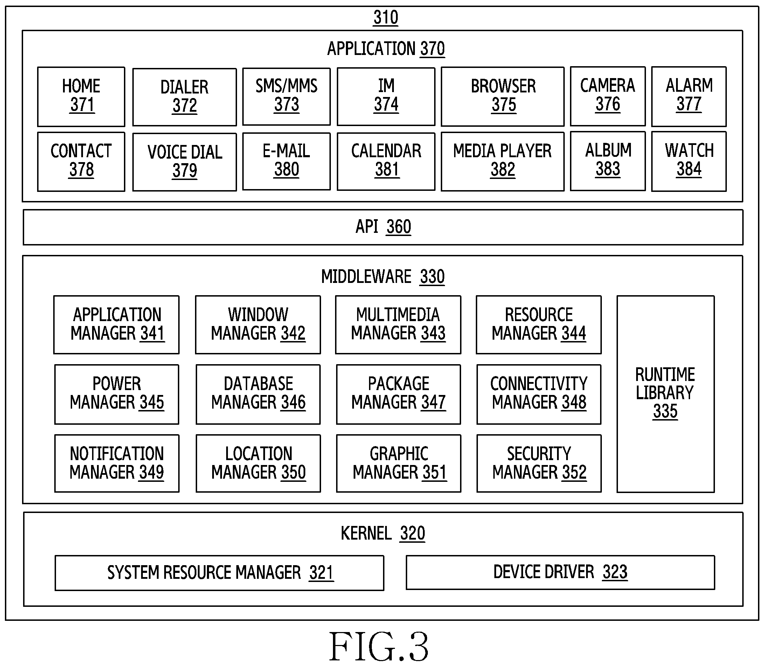

FIG. 3 is a block diagram illustrating an example program module according to various example embodiments of the present disclosure.

According to an embodiment of the present disclosure, the program module 310 (e.g., the program 140) may include an Operating System (OS) for controlling resources related to the electronic device (e.g., the electronic device 101) and/or various applications (e.g., the application programs 147) executed in the operating system. The operating system may be, for example, AndroidTM, iOSTM, WindowsTM, SymbianTM, TizenTM, BadaTM. Referring to FIG. 3, the program module 310 may include a kernel 320, middleware 330, an API 360, and/or applications 370. At least some of the program module 310 may be preloaded on an electronic device, or may be downloaded from an external electronic device (e.g., the electronic device 102 or 104, or the server 106).

The kernel 320 (e.g., the kernel 141) may include, for example, a system resource manager 321 and/or a device driver 323. The system resource manager 321 may control, allocate, or collect system resources. According to an embodiment of the present disclosure, the system resource manager 321 may include a process management unit, a memory management unit, a file system management unit, and the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

For example, the middleware 330 may provide a function required in common by the applications 370, or may provide various functions to the applications 370 through the API 360 so as to enable the applications 370 to efficiently use the limited system resources in the electronic device. According to an embodiment of the present disclosure, the middleware 330 (e.g., the middleware 143) may include at least one of a run time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while an application 370 is being executed. The runtime library 335 may perform input/output management, memory management, or the functionality for an arithmetic function. The application manager 341 may manage, for example, a life cycle of at least one of the applications 370. The window manager 342 may manage Graphical User Interface (GUI) resources used by a screen. The multimedia manager 343 may recognize a format required for reproduction of various media files, and may perform encoding or decoding of a media file by using a codec suitable for the corresponding format.

The resource manager 344 may manage resources of a source code, a memory, and a storage space of at least one of the applications 370. The power manager 345 may operate together with a Basic Input/Output System (BIOS) to manage a battery or power source and may provide power information or the like required for the operations of the electronic device. The database manager 346 may generate, search for, or change a database to be used by at least one of the applications 370. The package manager 347 may manage installation or an update of an application distributed in a form of a package file.

For example, the connectivity manager 348 may manage wireless connectivity such as Wi-Fi or Bluetooth. The notification manager 349 may display or notify of an event such as an arrival message, promise, proximity notification, and the like in such a way that does not disturb a user. The location manager 350 may manage location information of an electronic device. The graphic manager 351 may manage a graphic effect which will be provided to a user, or a user interface related to the graphic effect. The security manager 352 may provide all security functions required for system security, or user authentication.

The middleware 330 may include a middleware module that forms a combination of various functions of the above-described components. The middleware 330 may provide a module specialized for each type of OS in order to provide a differentiated function. Further, the middleware 330 may dynamically remove some of the existing components or add new components. The API 360 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (e.g., the application programs 147) may include, for example, one or more applications which may provide functions such as a home 371, a dialer 372, an SMS/MMS 373, an Instant Message (IM) 374, a browser 375, a camera 376, an alarm 377, contacts 378, a voice dial 379, an email 380, a calendar 381, a media player 382, an album 383, a clock 384, health care (e.g., measuring exercise quantity or blood sugar), or environment information (e.g., providing atmospheric pressure, humidity, or temperature information). According to an embodiment of the present disclosure, the applications 370 may include an application (hereinafter, referred to as an "information exchange application" for convenience of description) that supports exchanging information between the electronic device (e.g., the electronic device 101) and an external electronic device (e.g., the electronic device 102 or 104). The information exchange application may include, for example, a notification relay application for transferring specific information to an external electronic device or a device management application for managing an external electronic device.

For example, the notification relay application may include a function of transferring, to the external electronic device, notification information generated from other applications of the electronic device. Further, the notification relay application may receive notification information from, for example, an external electronic device and provide the received notification information to a user. The device management application, for example, may install, delete, or update the functions {e.g., turning on and off the external electronic device (or some elements thereof) or adjusting the brightness (or resolution) of a display} of the external electronic device that communicates with the electronic device or the applications executed in the external electronic device. According to an embodiment, the applications 370 may include applications that are designated according to the attributes of the external electronic device (e.g., a healthcare application for a mobile medical device). According to an embodiment, the applications 370 may include applications that are received from the external electronic device. At least some of the program module 310 may be implemented (e.g., executed) by software, firmware, hardware (e.g., the processor 210), or a combination thereof, and may include modules, program routines, sets of instructions, or processors for executing one or more functions.

The term "module" as used herein may, for example, refer to a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of a dedicated processor, a CPU, an Application-Specific Integrated Circuit (ASIC) chip, a Field-Programmable Gate Arrays (FPGA), and a programmable-logic device for performing operations which has been known or are to be developed hereinafter. According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable recoding media may be, for example, the memory 130.

An electronic device described hereinbelow may be the electronic device 101 of FIG. 1 or the electronic device 201 of FIG. 2. For convenience of explanation, the electronic device will be described as an example of the electronic device 101. However, the electronic device is not limited to the electronic device 101 of FIG. 1 by the following descriptions.

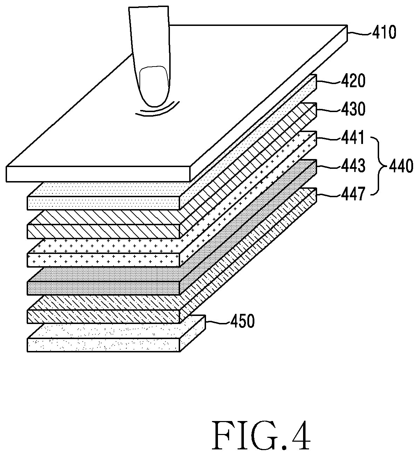

FIG. 4 is a view illustrating a structure of the electronic device according to various embodiments.

Referring to FIG. 4, the electronic device 101 may include a housing (or main body), and may include a cover window 410, a touch sensor 420, a display 430, a force sensor 440, and a haptic actuator 450 inside the housing.

The housing may include a first surface facing a first direction and a second surface facing a second direction opposite the first direction. Here, the first surface may correspond to a front surface of the electronic device 101, and for example, may be a surface displaying a user interface through the display 430. The cover window 410 may correspond to the first surface of the housing. The second surface may be a rear surface (or a bottom surface) of the electronic device 101.

The touch sensor 420 may be arranged between the first surface and the second surface of the housing, and may detect a point of at least one touch applied to the display by an external object. For example, the touch sensor 420 may be arranged between the cover window 410 and the display 430. According to various embodiments, the touch sensor 420 may be embedded in the display 430 (for example, a touch screen).

The display 430 may be arranged between the first surface and the second surface of the housing, and may be exposed through the first surface. The display 430 may correspond to the display 160 of FIG. 1 and the display 260 of FIG. 2. The display 430 may be arranged on a lower end of the touch sensor 420.

The force sensor 440 may be arranged between the first surface and the second surface of the housing, and for example, may be arranged on a lower end of the display 430. The force sensor 440 may include a first electrode 441, a dielectric layer 443, and a second electrode 447. The first electrode 441 or the second electrode 447 may be formed with a transparent material or an opaque material. The transparent material, which is a transparent conductive material, may be formed of, for example, at least one of indium tin oxide (ITO), indium zinc oxide (IZO), Ag nanowire, a metal mesh, a transparent polymer conductor, and graphene, or a compound of two or more of the above-mentioned materials. The opaque material may be formed of at least one of copper (Cu), silver (Ag), magnesium (Mg), titanium (Ti), and graphene, or a compound of two or more of the above-mentioned materials. The dielectric layer 443 may include at least one of silicon, air, foam, membrane, optical clear adhesive (OCA), sponge, rubber, ink, polymer (for example, polycarbonate (PC), polyethylene terephthalate (PET), etc.).

According to various embodiments, one of the first electrode 441 and the second electrode 447 may be a ground substrate, and the other one may be formed in a repeated polygonal pattern. In this case, the force sensor 440 may detect a force in a self capacitance method. According to various embodiments, one of the first electrode 441 and the second electrode 447 may have a first direction pattern TX, and the other one may have a second direction pattern RX which is perpendicular to the first direction. In this case, the force sensor 440 may detect a force in a mutual capacitance method. According to various embodiments, the first electrode 441 of the force sensor 440 may be formed on a flexible printed circuit board (FPCB), and may be attached to the display 430 or may be directly formed on one surface of the display 430.

The haptic actuator 450 provides a sense of touch to a user, and for example, when a user presses the electronic device 101, the haptic actuator 450 may provide a sense of pressing to the user.

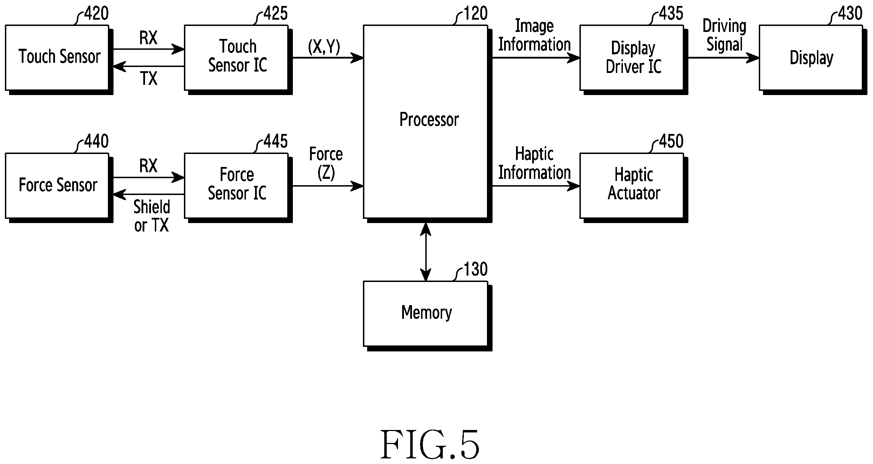

FIG. 5 is a view illustrating a hardware configuration of the electronic device according to various embodiments.

Referring to FIG. 5, the electronic device 101 may include a processor 120, a memory 130, a touch sensor 420, a touch sensor integrated circuit (IC) 425, a display 430, a display driver IC 435, a force sensor 440, a force sensor IC 445, and a haptic actuator 450.

The processor 120 may receive a position signal (for example, coordinates (X,Y)) detected at the touch sensor 420 from the touch sensor IC 425. The processor 120 may receive a force signal (for example, force coordinates (X,Y), or an intensity of a force (Z)) detected at the force sensor 440 from the force sensor IC 445. The processor 120 may synchronize the position signal of the touch sensor 420 and the force signal of the force sensor 440. The processor 120 should process the position signal and the force signal altogether, but the entities detecting generation of the signals are the touch sensor 420 and the force sensor 440, which are different. Therefore, the processor 120 may synchronize the two signals. For example, a touch signal may be a signal that is detected when the display 430 is touched, and may be generated without the force signal. However, the force signal may be a signal that is detected when the user touches the display 430 and strongly presses against the display 430. Therefore, only the force signal may not be generated without the touch signal. Accordingly, when the force signal is generated, the processor 120 may synchronize the touch signal and the force signal and may process the signals as a single input.

The processor 120 may transmit image information to the display driver IC 435, and the display driver IC 435 may transmit a driving signal for driving the display 430 according to the image information to the display 430. The processor 120 may transmit haptic information to the haptic actuator 450.

According to various embodiments, the electronic device may include: the housing including the first surface facing the first direction, and the second surface facing the second direction opposite the first direction; the display 430 arranged between the first surface and the second surface, and exposed through the first surface; the touch sensor 420 arranged between the first surface and the second surface to detect a point of at least one touch by an external object on the display; the force sensor 440 arranged between the first surface and the second surface to detect a force applied against the display by the external object; at least one processor 120 electrically connected with the display, the touch sensor, and the force sensor; and the memory 130 electrically connected with the processor and configured to store a plurality of application programs including a plurality of functions, respectively. The memory 130 may store instructions that, when executed, cause the processor 120 to display a user interface on the display, to receive, from the touch sensor, first data indicating that the external object touches a part of the display, to receive, from the force sensor, second data indicating a force applied against the display by the external object while the external object is touching a part of the display, to determine at least one application based at least in part on the first data, to determine a change of a direction of the force applied against the display by the external object, based on at least part of the first data or the second data, the direction being perpendicular to the first direction, to select a function associated with the at least one application based on at least part of the change, and to perform the selected function.

According to various embodiments, the electronic device may include: the housing including the first surface facing the first direction, and the second surface facing the second direction opposite the first direction; the display 430 arranged between the first surface and the second surface, and exposed through the first surface; the touch sensor 420 arranged between the first surface and the second surface to detect a point of at least one touch by an external object on the display; the force sensor 440 arranged between the first surface and the second surface to detect a force applied against the display by the external object; at least one processor 120 electrically connected with the display, the touch sensor, and the force sensor; and the memory 130 electrically connected with the processor and configured to store a plurality of application programs including a plurality of functions, respectively. The memory 130 may store instructions that, when executed, cause the processor 120 to display a user interface on the display, to receive, from the touch sensor, first data indicating that the external object touches a part of the display, to receive, from the force sensor, second data indicating a force applied against the display by the external object while the external object is touching a part of the display, to determine a first function based on at least part of the first data, to determine a change of a direction of the force applied against the display by the external object, based on at least part of the first data or the second data, the direction being perpendicular to the first direction, to select a second function associated with the first function based on at least part of the change, and to perform the selected function.

According to various embodiments, the electronic device may include: the housing including the first surface facing the first direction, and the second surface facing the second direction opposite the first direction; the display 430 arranged between the first surface and the second surface, and exposed through the first surface; the touch sensor 420 arranged between the first surface and the second surface to detect a point of at least one touch by an external object on the display; the force sensor 440 arranged between the first surface and the second surface to detect a force applied against the display by the external object; at least one processor 120 electrically connected with the display, the touch sensor, and the force sensor; and the memory 130 electrically connected with the processor and configured to store a plurality of application programs including a plurality of functions, respectively. The memory 130 may store instructions that, when executed, cause the processor 120 to display a user interface on the display, to receive, from the touch sensor, first data indicating that the external object touches a part of the display, to receive, from the force sensor, second data indicating a force applied against the display by the external object while the external object is touching a part of the display, to determine a first function associated with the at least one application based on at least part of the second data, to determine a change of a direction of the force applied against the display by the external object, based on at least part of the first data or the second data, the direction being perpendicular to the first direction, to select a second function associated with the application based on at least part of the change, and to perform the selected function.

According to various embodiments, the electronic device may include: the housing including the first surface facing the first direction, and the second surface facing the second direction opposite the first direction; the display 430 arranged between the first surface and the second surface, and exposed through the first surface; the touch sensor 420 arranged between the first surface and the second surface to detect a point of at least one touch by an external object on the display; the force sensor 440 arranged between the first surface and the second surface to detect a force applied against the display by the external object; at least one processor 120 electrically connected with the display, the touch sensor, and the force sensor; and the memory 130 electrically connected with the processor and configured to store a plurality of application programs including a plurality of functions, respectively. The memory 130 may store instructions that, when executed, cause the processor 120 to display a user interface on the display, to receive, from the touch sensor, first data indicating that the external object touches a part of the display, to receive, from the force sensor, second data indicating a force applied against the display by the external object while the external object is touching a part of the display, to determine a first function based on at least part of the second data, to determine a change of a direction of the force applied against the display by the external object, based on at least part of the first data or the second data, the direction being perpendicular to the first direction, to select a second function associated with the first function based on at least part of the change, and to perform the selected second function.

The change of the direction may be a change of at least one of a position, an intensity, an area, or a shape of the force.

The instructions may be to synchronize the first data and the second data when the second data is detected in the proximity of a detection position of the first data.

An input region of the second data and an input region of the change of the direction may overlap each other in part.

The change of the direction may be distinguished from a touch drag.

An amount of change of a position related to the change of the direction may be smaller than an amount of change of a position caused by the touch drag.

The instructions may be to operate in a force change processing mode and to provide a user interface related to the force change processing mode when the change of the direction of the force applied against the display by the external object is detected.

The change of the direction may be a change of distribution of intensities of the force.

A first layer for detecting a touch input, and a second layer for detecting a force input may be implemented, and the instructions may be to detect a change of a position of the force input based on a change of coordinates on the first layer.

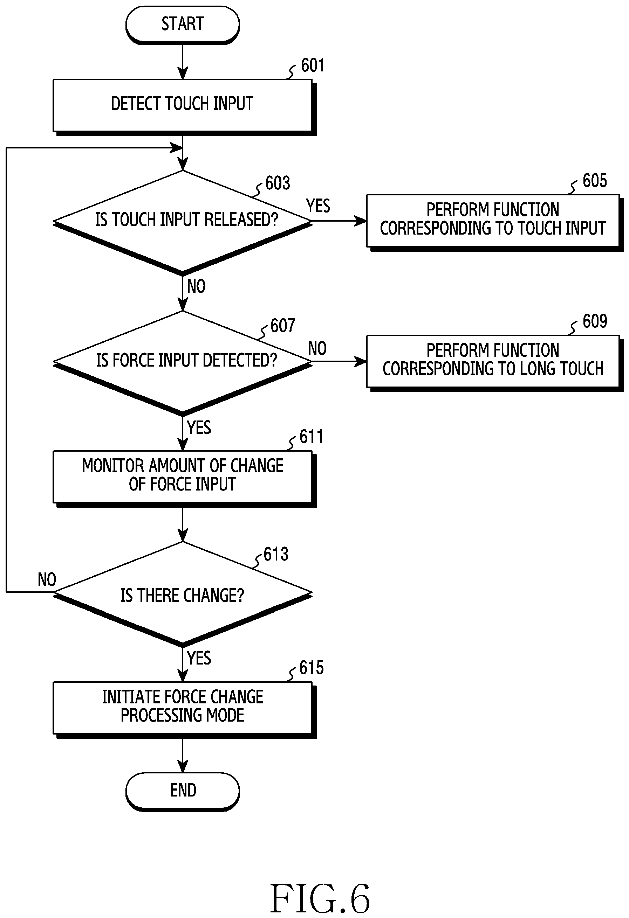

FIG. 6 is a flowchart illustrating a method for operating in a force change processing mode in the electronic device according to various embodiments.

Referring to FIG. 6, in operation 601, the electronic device 101 (for example, the processor 120) may detect a touch input. Referring to the hardware configuration of FIG. 5 described above, when a touch is generated on the display (for example, the display 430), the touch sensor (for example, the touch sensor 420) may transmit the generated touch signal to the touch sensor IC (for example, the touch sensor IC 425). The touch sensor IC may transmit a position signal (for example, position coordinates (X,Y)) of a position where the touch signal is generated to the processor 120. The processor 120 may detect the touch input on the display by receiving the position signal from the touch sensor IC.

In operation 603, the electronic device 101 (for example, the processor 120) may determine whether the touch input is released. A user may touch the display (for example, the display 430) and then may release the touch input. Alternatively, the user may touch the display and then hold the touch input. When the touch input is released, the processor 120 may perform operation 605, and, when the touch input is not released, the processor 120 may perform operation 607.

When the touch input is released (for example, Yes in operation 603), the electronic device 101 (for example, the processor 120) may perform a function corresponding to the touch input in operation 605. For example, when a touch input on an icon associated with an application is released, the processor 120 may execute the application associated with the touched icon. Alternatively, when the user touches an input field (or an input region) in a message application and then releases the touch input, the processor 120 may display a keypad (or keyboard) on the display.

When the touch input is not released (for example, No in operation 603), the electronic device 101 (for example, the processor 120) may determine whether a force input is detected in operation 607. Referring to the hardware configuration of FIG. 5 described above, when a touch generated on the display (for example, the display 430) is more strongly pressed, the force sensor (for example, the force sensor 440) may recognize that a force is generated, and may transmit the presence/absence of the force to the force sensor IC (for example, the force sensor IC 445). The force sensor IC may transmit a force signal (for example, force coordinates (X, Y) or an intensity of a force (Z)) of the generated force to the processor 120. The processor 120 may detect the force input associated with the touch input of operation 601 by receiving the force signal from the force sensor IC.

According to various embodiments, the force input may be detected from the position where the touch input is generated or a position close to (or adjacent to) the position where the touch input is generated. That is, when the user touches the display and more strongly presses, the position of the force input may be slightly different from the position where the touch input is generated to prese the display strongly. In addition, since the touch sensor determines whether the touch input is generated, and the force sensor determines whether the force input is generated, there may be a difference in the positions where the respective inputs are generated. To solve this, when an additional force input is generated while the touch input is being held, the processor 120 may synchronize the touch input and the force input with each other to process the inputs as a single input.

When the force input is not detected, the processor 120 may perform operation 609, and, when the force input is detected, the processor 120 may perform operation 611.

When the force input is not detected (for example, No in operation 607), the electronic device 101 (for example, the processor 120) may perform a function corresponding to a long touch in operation 609. For example, when the force input is not detected while the touch input is being held, the processor 120 may recognize the touch input as a long touch. For example, the touch input which is released after touching the display (for example, the display 430) (for example, the touch input inputted in operation 605) is a touch input of less than 1 second, and may be referred to as a tap touch. The long touch refers to an input which touches the display and then holds the touch for longer than a reference time (for example, 1 second). That is, when an additional force input is not detected while the touch input is being held, the processor 120 may recognize the touch input detected in operation 601 as a long touch. In this case, the processor 120 may perform a function corresponding to the long touch.

When the force input is detected (for example, Yes in operation 607), the electronic device 101 (for example, the processor 120) may monitor an amount of change of the force input in operation 611. For example, the processor 120 may detect whether there is a change in the force input detected in operation 607. The amount of change of the force input may indicate a change in at least one of a position, an intensity, an area (or size), or a shape of the force input. For example, the changed position may be a position close to (adjacent to) the position of the force input detected in operation 607. In addition, the changed intensity may be greater or smaller than the intensity of the force input detected in operation 607. Alternatively, the changed intensity may be a change of a point (for example, a center point) in the area of the force input detected in operation 607 where the intensity of the force is the greatest.

For example, the changed intensity may be a change of position coordinates of the point where the intensity of the force is the greatest from Z0 to Z1. The changed area (or size) may be larger or smaller than the area of the force input detected in operation 607. Alternatively, the changed area may refer to a change of the area and the position of the force input detected in operation 607. The changed area may overlap the area of the force input detected in operation 607 in part. The changed shape may refer to a change that is made according to the change of the area and the position of the force input, and for example, may refer to a change of the shape of the area from a circle to an oval.

In operation 613, the electronic device 101 (for example, the processor 120) may determine whether there is a change. For example, when there is a change in at least one of the position, the intensity, the area (or size) or the shape of the force input, the processor 120 may recognize that there is a change in the input. When there is a change, the processor 120 may perform operation 615, and, when there is no change, the processor 120 may return to operation 603. When the processor 120 returns to operation 603, the processor 120 may determine whether the touch input is released. Alternatively, when there is no change in the force input, the processor 120 may perform a function corresponding to the force input.

According to various embodiments, the change of the force input may be distinguished from a drag of the touch input. The drag of the touch input may refer to a movement of a coordinate value of the touch input. For example, the drag of the touch input may refer to a movement of touch coordinates from first position coordinates (X0, Y0) to second position coordinates (XI, Y1). The change of the force input may indicate the change of the position coordinates from the first position coordinates to the second position coordinates, but may also indicate that the area of the force input at the first position coordinates and the area of the force input at the second position coordinates may overlap each other in part. Accordingly, since the changed area of the force input should overlap the area of the force input before being changed in part, the amount of change of the position of the force input may be smaller than the amount of change of the position caused by the drag of the touch input.

When there is the change (for example, Yes in operation 613), the electronic device 101 (for example, the processor 120) may initiate a force change processing mode (for example, a shear force) operation in operation 615. The force change processing mode may be to provide various user interfaces based on the touch input and the change of the force input in the electronic device 101. When the electronic device operates in the force change processing mode, the processor 120 may perform a predetermined function based on the change of the input. A specific embodiment for performing the predetermined function will be described in detail hereinafter with reference to the drawings.

According to various embodiments, the processor 120 may perform a predetermined function based on a directionality of the force input. For example, the processor 120 may display an additional function menu window based on a direction of the force input in the force change processing mode. The processor 120 may scroll or select an item in the menu based on the direction or intensity of the force input in the function menu window. According to various embodiments, the processor 120 may reconfigure function items included in the function menu window, or may change arrangement positions of the function items, based on the change of the force input. Alternatively, the processor 120 may perform a predetermined function by reflecting the intensity or moving distance of the force input. In the present embodiment, inconvenience of having to select menus through several steps (or depths) to perform a function can be reduced.

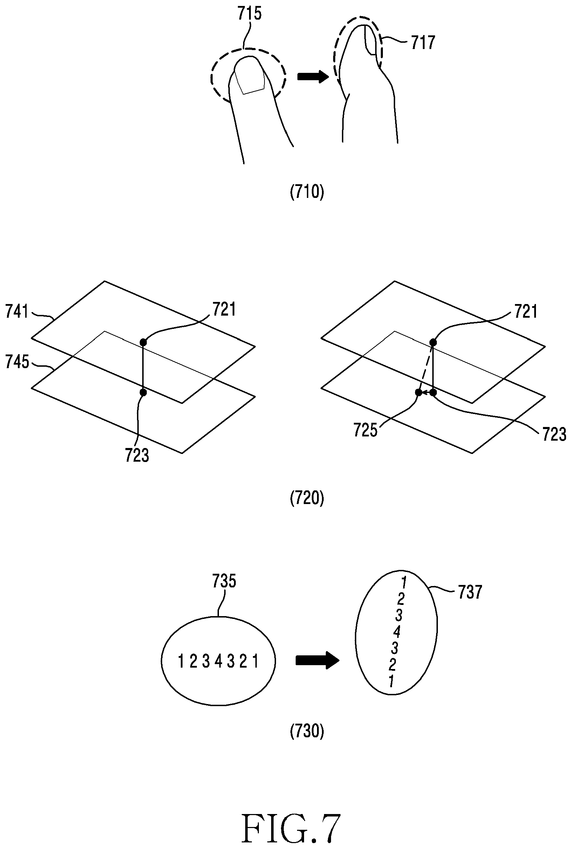

Hereinafter, an example of detecting a change of a force input will be described with reference to FIG. 7.

FIG. 7 is a view illustrating an example of recognizing a force processing change mode (for example, a shear force) according to various embodiments.

Referring to FIG. 7, reference numeral 710 indicates an example in which the electronic device 101 (for example, the processor 120) detects a change of an area of a force input, and recognizes a force processing change mode (for example, a shear force). The change of the area of the force input may be a change of a shape or a size of a region of the display (for example, the display 430) that the user presses against. For example, a first area 715 may indicate that the shape of the region is circular, and a second area 717 may indicate that the shape of the region is oval. In addition, the size of the first area 715 may be larger or smaller than the size of the second area 717. For example, the first area 715 may correspond to a front surface of a finger (for example, a surface opposite a nail), and the second area 717 may correspond to a side surface of the finger (for example, a surface between the front surface of the finger and the nail). When the area of the force input is changed, the processor 120 may recognize that the force input is changed. Herein, the first area 715 and the second area 717 may overlap each other in part. That is, the change of the force input may be distinguished from a change of the touch input, and the changed area of the force input may overlap the area of the force input before being changed in part.

Reference numeral 720 illustrates an example in which the electronic device 101 (for example, the processor 120) detects a change of coordinates (por position) of the force input, and recognizes the force change processing mode (for example, a shear force). A first layer 741 is to detect a touch input by the touch sensor (for example, the touch sensor 420), and a second layer 745 is to detect a force input by the force sensor 440. The processor 120 may detect a touch input at first coordinates 721 of the first layer 741, and may detect a force input at second coordinates 723 of the second layer 745 corresponding to the first coordinates 721. When the force input is detected at the first coordinates 721 and the second coordinates 723, and the user more strongly presses the display (for example, the display 430), the position of the detected force input on the second layer 745 may be changed. That is, the position may be slightly changed. For example, when the processor 120 detects the touch input at the first coordinates 721 of the first layer 741 and the user more strongly presses the display, the processor 120 may detect the force input at third coordinates 725 of the second layer 745 as shown in the right view of reference numeral 720.

According to various embodiments, when the area of the force input is changed as shown in reference numeral 710, the position coordinates of the force input may also be changed as shown in reference numeral 720. For example, when the user more strongly presses the display while touching at the first coordinates 721, the processor 120 may detect the force input at the second coordinates 723. Thereafter, when the user changes the position of the force input, the processor 120 may detect the force input at the third coordinates 725. However, the change of the position of the force input may be distinguished from the change of the position of the touch input (for example, a drag). According to various embodiments, in the case of the touch drag, only a change value of a touch position may be considered, whereas, in the case of the force input, changes of the position and the area of the force input may be considered. That is, since the change of the force input should be accompanied by overlapping between the area of the force input before being changed and the area of the force input after being changed in part, a difference between the position of the force input before being changed (for example, the second coordinates 723) and the position of the force input after being changed (for example, coordinates 725) may not be great.

According to various embodiments, the change of the position of the force input may refer to a change of a center point of the force input. For example, when the user touches at the first coordinates 721 and applies a force to the display, the processor 120 may recognize the center point of the force input as the second coordinates 723. Thereafter, when the user changes at least one of the position, the intensity, or the area of the force input, the processor 120 may recognize the center point of the force input as the third coordinates 725.

Reference numeral 730 illustrates an example in which the electronic device 101 (for example, the processor 120) recognizes the force change processing mode (for example, a shear force) by detecting a change of the intensity of the force input. The change of the intensity of the force input may be a change of a magnitude of a pressing force of the user against the display. For example, a first intensity 735 is an example of distribution of magnitudes of force in the horizontal direction. The first intensity 735 is distribution of magnitudes of force in the area of a force input which is horizontally oval, and as the value increases, the magnitude of the force may increase. For example, the processor 120 may measure an intensity of the greatest force (for example, 4) at the center (for example, a center point) of the first intensity 735 in the horizontal direction, and the intensity of the force may be reduced as the force is further away from the center. The area of the force input with the first intensity 735 may be the first area 715 in reference numeral 710.

A second intensity 737 is an example of distribution of magnitudes of force in the vertical direction. The second intensity 737 may be distribution of magnitudes of force in the area of a force input which is vertically oval, and as the value increases, the magnitude of the force increases. For example, the processor 120 may measure an intensity of the greatest force (for example, 4) at the center (for example, a center point) of the second intensity 735 in the vertical direction, and the intensity of the force may be reduced as the force is further away from the center. The area of the force input with the second intensity 737 may be the second area 717 in reference numeral 710. The processor 120 may recognize the force change processing mode (for example, a shear force) when the change of the intensity of the force input (for example, the change from the first intensity 735 to the second intensity 737) is detected.

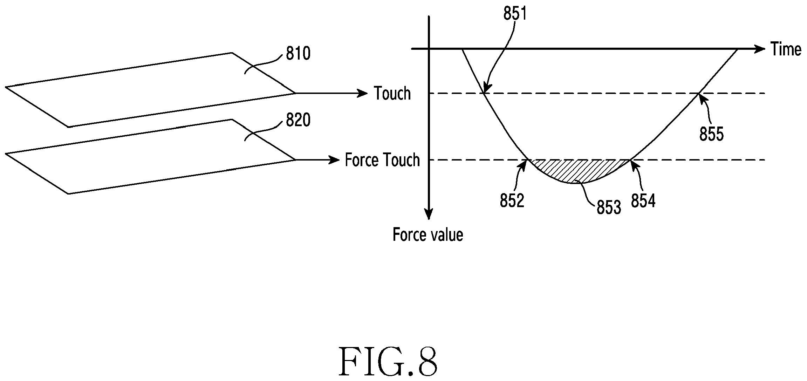

FIG. 8 is a view illustrating an example of detecting a user input according to time according to various embodiments of the present disclosure.

Referring to FIG. 8, the electronic device 101 (for example, the processor 120) may detect a touch input 851 on a first layer 810, and may detect a force input 852 (for example, a force touch) on a second layer 820. The processor 120 may detect the touch input 851 directed toward the display (for example, the display 430) according a time, and may detect the force input 852 of more strongly pressing against the display while holding the touch input 851. The force input 852 may have a force value (for example, a position, an intensity, an area, or a shape) changed with time. For example, when the force input (for example, the position, the area, or the shape) is changed, the intensity of the force may be changed, and the change of the intensity of the force may be recognized as a change of the force input. The processor 120 may detect the change 853 of the force input according to time, and may detect a release 854 of the force input which moves further away from the display, and may detect a release 855 of the touch input.

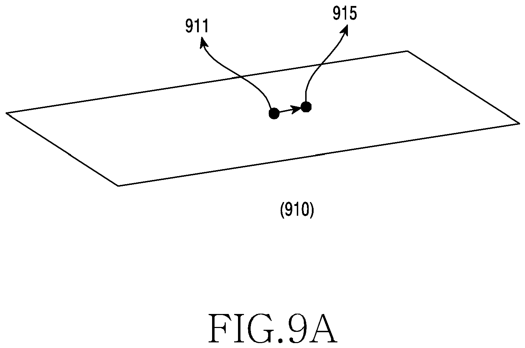

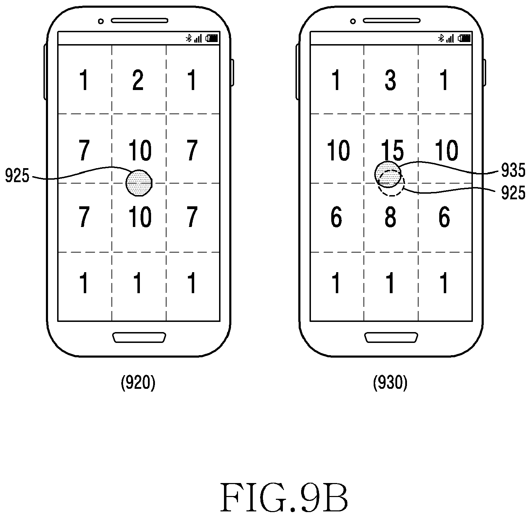

FIGs. 9A and 9B are views illustrating an example of detecting a user input in the touch sensor and the force sensor according to various embodiments.

FIG. 9A illustrates an example of detecting a change of a position of an input. Referring to FIG. 9A, the electronic device 101 (for example, the processor 120) may be implemented with a first layer for detecting a touch input and a second layer for detecting a force input. The processor 120 may detect a change of a position of a force input based on a change in coordinates on the first layer 910. For example, the first layer 910 may detect a change of coordinates indicating that a touch input (or force input) generated at the first coordinates 911 moves to second coordinates 915.

According to various embodiments, the first coordinates 911 of FIG. 9A correspond to first coordinates 925 of FIG. 9B, and the second coordinates 915 of FIG. 9A correspond to second coordinates 935 of FIG. 9B.

FIG. 9B illustrates an example of detecting a change of an intensity of a force input. Referring to FIG. 9B, reference numeral 920 or 930 illustrate an example in which the electronic device 101 has 12 force sensors embedded therein, and an intensity of a force is detected based on an input value inputted to each sensor, and an approximate coordinate value is detected based on the intensity of the force. For example, reference numeral 920 shows that, when a force input is not detected, the intensity of the force is "1," and, when a force input is detected, the intensity of the force may be changed (for example, 2, 7, 10). For example, when the force input is detected at the first coordinates 925, a force sensor which is the closest to the first coordinates 925 may detect the intensity of the force as "10," and a force sensor which is adjacent to the closest sensor may detect the intensity of the force as "2" or "7." That is, as the intensity of the force increases, the value increases.

Reference numeral 930 indicates a change of the intensity of the force input when the force input detected at the first coordinates 925 is changed to the second coordinates 935. When the force input is changed from the first coordinates 925 to the second coordinates 935, the processor 120 may predict that the force input (for example, the position, the intensity, or the area) is changed in the upward direction. The change of the force input may cause a change of the intensity of the force of the force sensor that is the closest to the second coordinates 935 from "10" to "15." Since the second coordinates 935 which are above the first coordinates 925 are detected, the intensities of forces of force sensors positioned above (for example, the intensity of the force of "3"), on the left (for example, the intensity of the force of "10"), and on the right (for example, the intensity of the force of "10") of the force sensor, having the intensity of the force of "15" which is the greatest change, are also greatly changed. The intensities of forces of force sensors positioned under the first coordinates 925 decrease to "6," "8," "6," respectively. The processor 120 may detect that the position of the force input moves from the first coordinates 925 to the second coordinates 935, based on the change of the intensity of the force (for example, sensing values of the force sensors).

Since the force input is changed in the upward direction, the processor 120 according to various embodiments may perform a corresponding function based on the change of the force input.

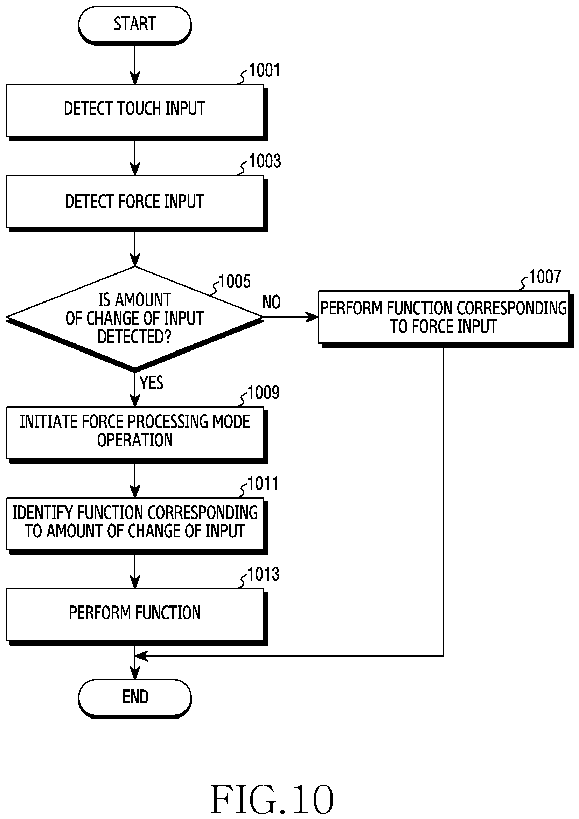

FIG. 10 is a flowchart illustrating an operating method in the electronic device according to various embodiments.

Referring to FIG. 10, the electronic device 101 (for example, the processor 120) may detect a touch input in operation 1001. The processor 120 may detect a touch input on a first layer (for example, the first layer 810) which is detected by a touch sensor (for example, the touch sensor 420). Since operation 1001 is the same as or similar to operation 601 of FIG. 6, a detailed description thereof is omitted. The touch input may not be released and may be held.

In operation 1003, the electronic device 101 (for example, the processor 120) may detect a force input. The processor 120 may detect a force input on a second layer (for example, the second layer 820) which is detected by a force sensor (for example, the force sensor 440). The processor 120 may detect the force input while the touch input detected in operation 1001 is being held. For example, the force input may be an input of a user touching a display (for example, the display 430) and more strongly pressing against the display. Since operation 1003 is the same as or similar to operation 607 of FIG. 6, a detailed description thereof is omitted.

In operation 1005, the electronic device 101 (for example, the processor 120) may determine whether an amount of change of the input is detected. The amount of change of the input may include at least one of changes of coordinates, an intensity, and an area of the force input while the touch input is being held. The change of the coordinates of the force input may be calculated based on a change of coordinates of the touch input, or by using a change of coordinates of the touch input.

When the amount of change of the input is not detected, the processor 120 may perform operation 1007, and, when the amount of change of the input is detected, the processor 120 may perform operation 1009.

When the amount of change of the input is not detected (for example, No in operation 1005), the electronic device 101 (for example, the processor 120) may process a function corresponding to the force input in operation 1007. For example, when the amount of change of the input is not detected and the touch input and the force input are released, the processor 120 may perform a function corresponding to the force input. For example, when the force input is detected from an input field in a message application, the processor 120 may display a control window (for example, a control window for zoom in, zoom out, select, select all, copy, etc.) corresponding to the force input. The function corresponding to the force input and a function corresponding to a long touch may be the same as or different from each other. This follows an implementation example of the electronic device 101, and may vary according to settings of the electronic device 101.

When the amount of change of the input is detected (for example, Yes in operation 1005), the electronic device 101 (for example, the processor 120) may initiate a force change processing mode operation. For example, when the amount of change of at least one of the coordinates, the intensity, or the area of the force input is detected, the processor 120 may operate in the force change processing mode. The force change processing mode (for example, a shear force) may be a mode in which the electronic device 101 provides various user interfaces based on the touch input and the change of the force input.

In operation 1011, the electronic device 101 (for example, the processor 120) may identify a function corresponding to the amount of change of the input. For example, the processor 120 may provide a function menu window in the force change processing mode, and, when the change of the input is a change in the upward direction, the processor 120 may identify a function corresponding to a right menu item of the function menu window. For example, the function menu window may provide a plurality of photographing types as items.

In operation 1013, the electronic device 101 (for example, the processor 120) may perform the identified function. For example, when the right menu item is a second photographing type, the processor 120 may display a preview image photographed in the second photographing type. To achieve this, the processor 120 may execute a camera application, and may display a preview image according to the second photographing type through the camera application.

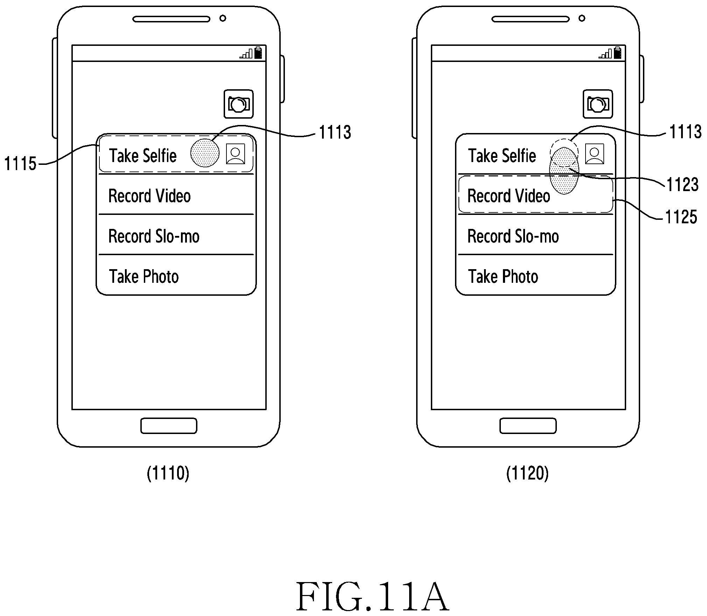

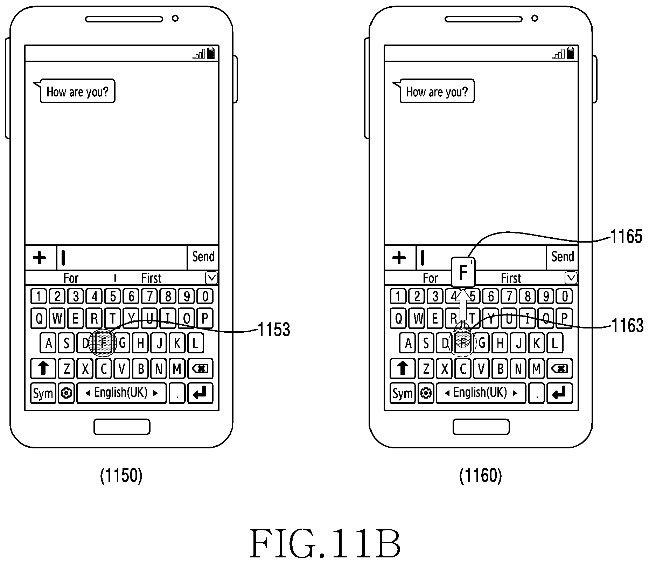

FIGs. 11A and 11B are views illustrating an example of controlling a user interface according to the operating method of FIG. 10.

FIG. 11A illustrates an example of displaying a user interface based on a change of a force input.

Referring to FIG. 11A, a first user interface 1110 may provide a function menu window when a force input 1113 is generated. When the force input 1113 is generated, the electronic device 101 (for example, the processor 120) may operate in the force change processing mode and may display the first user interface 1110 including the function menu window. The first user interface 1110 may provide the function menu window with reference to a position where the force input 1113 is generated. For example, the function menu window relates to a photographing type of a camera, and may include menu items "Take Selfie," "Record Video," "Record Slo-mo," and "Take Photo." The function menu window may have a focus (or a selection indicator) positioned on the first photographing type (for example, Take Selfie) where the force input 1113 is generated.

According to various embodiments, the electronic device 101 (for example, the processor 120) may configure different menu items to be included in the function menu window according to an application positioned at the position where the force input is generated. For example, when the force input is detected over an image, the processor 120 may provide menu items including zoom in, zoom out, rotate, delete in the function menu window.

According to various embodiments, when the release of the force input 1113 is detected while the focus is positioned on the first photographing type, the electronic device 101 (for example, the processor 120) may execute a camera application according to the first photographing type. Alternatively, when the force input 1113 is released while the focus is positioned on the first photographing type, the processor 120 may make the function menu window disappear (or be deleted) form the first user interface 1110.

When a change 1123 of the force input 1113 is generated, a second user interface 1120 may be displayed to scroll the menu items in the function menu window. For example, the processor 120 may detect the change 1123 of the force input of slightly moving down. The change 1123 of the force input may be a change of at least one of a position, an intensity, an area, or a shape of the force input 1113. The processor 120 may change the focus (or the selection indicator) from the first photographing type (for example, Take Selfie) to the second photographing type (for example, Record Video) in the function menu window, based on the change 1123 of the force input. When the focus is positioned on the second photographing type and the force input is released, the processor 120 may execute the camera application according to the second photographing type. In addition, when the user intends to change the focus in the function menu window of the second user interface 1120 to a third photographing type (for example, Record Slo-mo) or a fourth photographing type (for example, Take Photo), the user may select the photographing type positioned on a lower end by changing the force while holding the force input 1113, or may give an effect of dragging.

According to various embodiments, the electronic device 101 (for example, the processor 120) may operate in the force change processing mode and display the first user interface 1110, and then may move a menu item in the control menu window based on a new touch input (or a force input) after the force input is released. For example, the user may release the force input and the touch input while the focus is positioned on the first photographing type (for example, Take Selfie) in the control menu window. The processor 120 may receive, from the user, an input (or touch input) of scrolling the focus from the first photographing type to the second photographing type or the fourth photographing type. The processor 120 may position the focus in the control menu window on any one of the second to fourth photographing types according to the scroll input. The processor 120 may position the focus based on the scroll input, and, when a release of the scroll input is detected, the processor 120 may execute the camera application according to the photographing type where the focus is positioned.

FIG. 11B illustrates another example of displaying a user interface based on a change of a force input.

Referring to FIG. 11B, a first user interface 1150 may be scrolling in a preview state based on a force input 1153. For example, when the force input 1153 on the character "F" of a keyboard is detected, the processor 120 may scroll characters on the keyboard based on the force input 1153. A second user interface 1160 may zoom in the character in the preview state based on a change of a force input 1163. For example, when the force input 1163 is generated on the character "F" of the keyboard and moves up, the processor 120 may zoom in and display the character "F" on the keyboard based on the change 1165 of the force input, or may display another character "F"' associated with the character "F." The processor 120 may display the zoomed-up character "F"' 1165 in the form of a pop-up window.

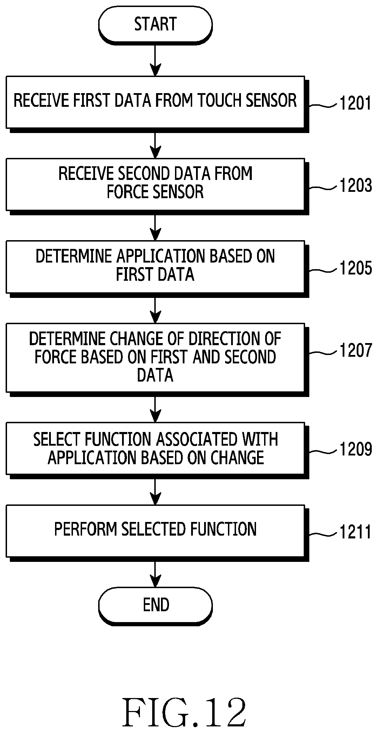

FIG. 12 is a flowchart illustrating a method for providing a user interface in the electronic device according to various embodiments.

Referring to FIG. 12, in operation 1201, the electronic device 101 (for example, the processor 120) may receive first data from the touch sensor 420. The first data may be touching, by an external object, a part of the display 430, and may be a "touch input." The external object may be a medium through which the touch sensor 420 is able to detect a touch when the medium touches the display 430, and for example, may be at least one of a user's body, finger, and a touch pen.

In operation 1203, the electronic device 101 (for example, the processor 120) may receive second data from the force sensor 440. The second data may indicate a force applied against the display 430 by the external object while the external object touches a part of the display 430, and may be a "force input."

In operation 1205, the electronic device 101 (for example, the processor 120) may determine an application based on the first data. For example, the processor 120 may determine at least one application based on at least part of the first data. For example, when the first data is detected over an icon related to an application, the processor 120 may determine an application corresponding to the icon as an application based on the first data.

In operation 1207, the electronic device 101 (for example, the processor 120) may determine a change of a direction of the force based on the first data and the second data. For example, the direction may be perpendicular to a direction of the display 430. The change of the direction of the force may refer to a change of at least one of a position, an intensity, an area, or a shape of the second data.

In operation 1209, the electronic device 101 (for example, the processor 120) may select a function associated with the application based on the change. For example, the processor 120 may provide one or more functions associated with the application based on the change of the direction of the force. The user may select any one of the one or more functions. For example, the processor 120 may provide a function menu window including one or more functions associated with the application, and may detect a user input of selecting a function in the function menu window. The user input may indicate a change of the force while holding the touch input and the force input.

In operation 1211, the electronic device 101 (for example, the processor 120) may perform the selected function. For example, the function may be related to photographing by a camera, and may be executing a camera application according to a selected photographing type when the photographing type is selected.

According to various embodiments, when the moving direction of the force is linear like an upward, downward, leftward, or rightward direction, the processor 120 may determine the direction by calculating a coordinate value currently detected at the touch sensor 420 from the initial force touch. For example, when the force touch is generated and then moves up, a corresponding function may be executed. According to various embodiments, when the moving direction of the force is curved, the processor 120 may consider a moving distance as a more important factor. For example, when the force input is moved outward while drawing a circle, objects in a folder may be interpreted as being gradually exposed to a screen. According to various embodiments, when the moving direction of the force has various shapes, the processor 120 may consider a drawn shape or figure as a more important factor. For example, when a moving track of the force input draws a certain shape, the processor 120 may perform a function or a service according to the shape. For example, when a star is drawn after a force touch is generated, the processor 120 may store a force-touched object (for example, an application, data, an image) in a memo, may move the force-touched object, or may perform a function corresponding to the force-touched object.

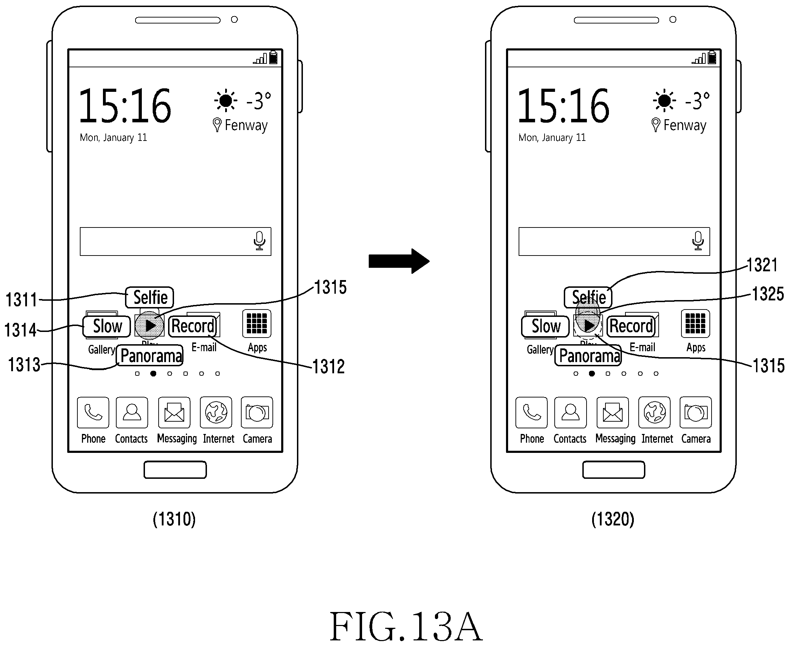

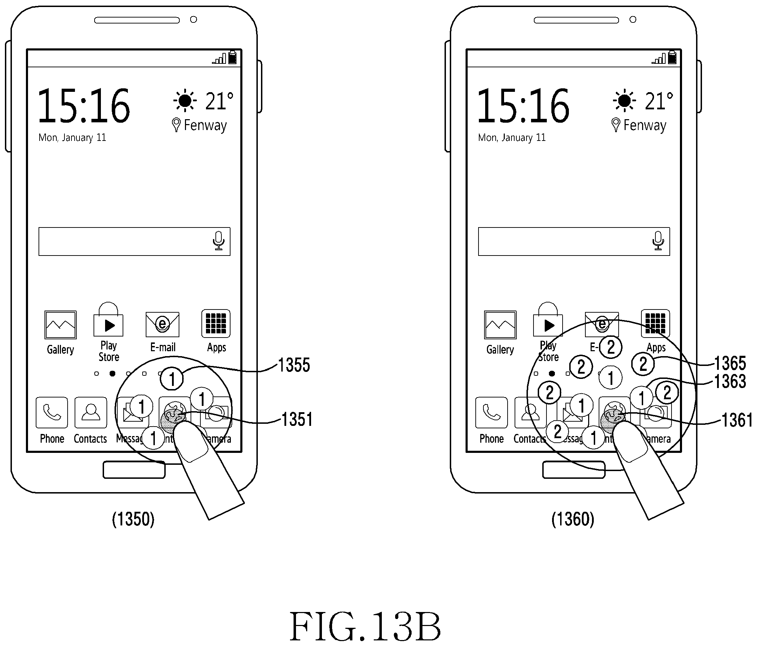

FIGs. 13A and 13B are views illustrating an example of controlling a user interface according to the operating method of FIG. 12.

FIG. 13A illustrates an example of providing a user interface based on a force touch.

Referring to FIG. 13A, a first user interface 1310 may include a function menu window associated with a camera application. The processor 120 may detect a force touch 1315 over an icon corresponding to the camera application in the first user interface 1310 including the icon. When the force touch 1315 is detected, the processor 120 may display a function menu window on the first user interface 1310. The function menu window may be provided in the form of a pop-up window, and may include one or more functions associated with the camera application. For example, the function menu window may include a first function 1311 (Selfie), a second function 1312 (Record), a third function 1313 (Panorama), and a fourth function 1314 (Slow).

A second user interface 1320 illustrates an example of selecting any one function 1321 in the function menu window according to a change 1325 of the force touch. The user may input the force touch 1315 over the icon corresponding to the camera application, and may select any one of the functions included in the function menu window by moving the force touch 1315 up, down, left, or right. For example, the user may slightly move the force touch 1315 upward. When a change 1325 of the force touch of moving upward is detected, the processor 120 may select the first function 1321 (Selfie) based on the change 1325 of the force touch. The processor 120 may execute the camera application according to the selected first function 1321 (Selfie). Herein, referring to the force touch 1315 and the change 1325 of the force touch, it can be seen that the area, shape, and position of the force touch is changed.

FIG. 13B illustrates another example of providing a user interface based on a force touch.

Referring to FIG. 13B, a first user interface 1350 may provide an additional object according to an intensity of a force. For example, when a force touch 1351 is detected over an icon associated with an Internet application, the processor 120 may display objects 1355 associated with the Internet application or attributes of the Internet application in the form of a circle. The objects 1355 may be a menu, a function, and a linked service associated with the Internet application. In the first user interface 1350, the objects 1355 are expressed by number, but the objects 1355 may be expressed by texts like a function menu window. The objects 1355 may be displayed to have a predetermined shape with reference to the force touch 1351. For example, the predetermined shape may be a "circle." In addition, the processor 120 may adjust the number of objects based on an intensity of the force touch 1351.

A second user interface 1360 may display the increased number of objects based on the intensity of a force. When the intensity of a force touch 1361 does not exceed a reference intensity, the processor 120 may provide as many objects 1363 as the objects expressed by number "1" in the second user interface 1360. When the intensity of the force touch 1361 exceeds the reference intensity, the processor 120 may provide as many objects 1365 as the objects expressed by number "2." That is, as the intensity of the force touch 1361 increases, the processor 120 may increase the number of objects to be provided. As the number of objects increases, a shape, a range, or an area for providing the objects may become larger.

According to various embodiments, the electronic device 101 (for example, the processor 120) may additionally consider a speed according to a distance that the force touch is moved up, down, left, or right on coordinates per unit time, and may give weights to the objects. That is, the processor 120 may display an object having a high weight closest to a position where the force touch is generated. Accordingly, even when the user slightly moves, a desired object may be directly selected. For example, referring to the second user interface 1360, the object 1363 expressed by number "1" may have a higher weight than that of the object 1365 expressed by number "2."

For example, referring to the second user interface 1360, the objects 1363 expressed by number "1" may include a list of frequently used objects (for example, an application, a function, contacts, etc.), and the objects 1365 expressed by number "2" may include a list of recently used objects. When there is more change in the force input, the processor 120 may provide a third object including a list of objects according to intimacy. According to various embodiments, the electronic device 101 (for example, the processor 120) may change arrangement positions of the objects based on a change of the force input.

According to various embodiments, when an input change of the force touch 1361 of moving toward the object 1363 is detected, the electronic device 101 (for example, the processor 120) may select the object 1363 where the input change is generated, and, when a greater input change (for example, change of the intensity of the force) is detected, an object 1365 which is farther than the object 1363 where the input change is generated may be selected. That is, the processor 120 may select the object 1363 close to the force touch 1361, or may select the object 1365 which is farther than the object 1363 from the force touch 1361 according to the intensity of the force. In addition, the processor 120 may select an object by using the change of the force of the force touch 1361 like a joystick.

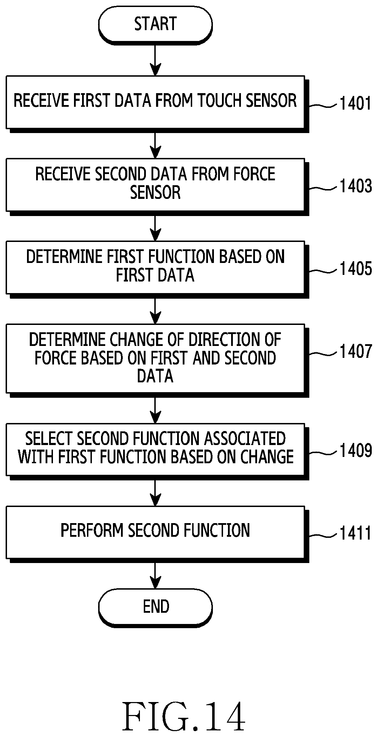

FIG. 14 is a flowchart illustrating a method for providing a user interface in the electronic device according to various embodiments.

Referring to FIG. 14, in operation 1401, the electronic device 101 (for example, the processor 120) may receive first data from a touch sensor (for example, the touch sensor 420). In operation 1403, the electronic device 101 (for example, the processor 120) may receive second data from a force sensor (for example, the force sensor 440).

In operation 1405, the electronic device 101 (for example, the processor 120) may determine a first function based on the first data. For example, when the first data is detected over an image, the processor 120 may determine the first function corresponding to the image or an attribute of the image. For example, the first function may be zooming in the image and providing the image as a preview image. Alternatively, when the first data is detected over a text, the processor 120 may determine, as the first function, a function of zooming in a text region including the text over which the first data is detected (for example, a circular region or a rectangular region having a predetermined radius with reference to coordinates of the first data), and displaying the text region in the form of preview.

In operation 1407, the electronic device 101 (for example, the processor 120) may determine a change of a direction of a force, based on the first data and the second data. For example, the direction may be perpendicular to a direction of a display (for example, the display 430). The change of the direction of the force may refer to a change of at least one of a position, an intensity, an area, or a shape of the second data.

In operation 1409, the electronic device 101 (for example, the processor 120) may select a second function associated with the first function based on the change. For example, the change of the direction of the force may be a movement in the horizontal direction, that is, to the left and the right, with reference to a front surface of the display, or a movement in the vertical direction, that is, up and down. Alternatively, the change of the direction of the force may be an intensity of the force. The second function may be zooming in or zooming out the preview image based on the change. Alternatively, the second function may be adjusting the size of the preview image based on the change. The zooming in or zooming out and the adjusting the size of the preview image may be different. Alternatively, the second function may be zooming in or zooming out the text region including the text over which the first data is detected, based on the change. Alternatively, the second function may be adjusting the size of the text region including the text over which the first data is detected, based on the change.

In operation 1411, the electronic device 101 (for example, the processor 120) may perform the selected second function. For example, when the second function is zooming in, the processor 120 may zoom in the preview image at a predetermined ratio with reference to the position where the first data is detected. The processor 120 may zoom in the preview image with reference to the position where the first data is detected, while maintaining the display size of the preview image. According to various embodiments, the processor 120 may determine a zoom-in or zoom-out ratio based on the changed distance or the intensity of the force, and may zoom in or zoom out the preview image according to the determined zoom-in or zoom-out ratio.

When the second function is adjusting the size of the preview image, the processor 120 may adjust the size of the preview image larger or smaller. According to various embodiments, the processor 120 may determine an adjustment ratio of the size of the preview image based on the changed distance or the intensity of the force, and may adjust the size of the preview image according to the determined adjustment ratio.

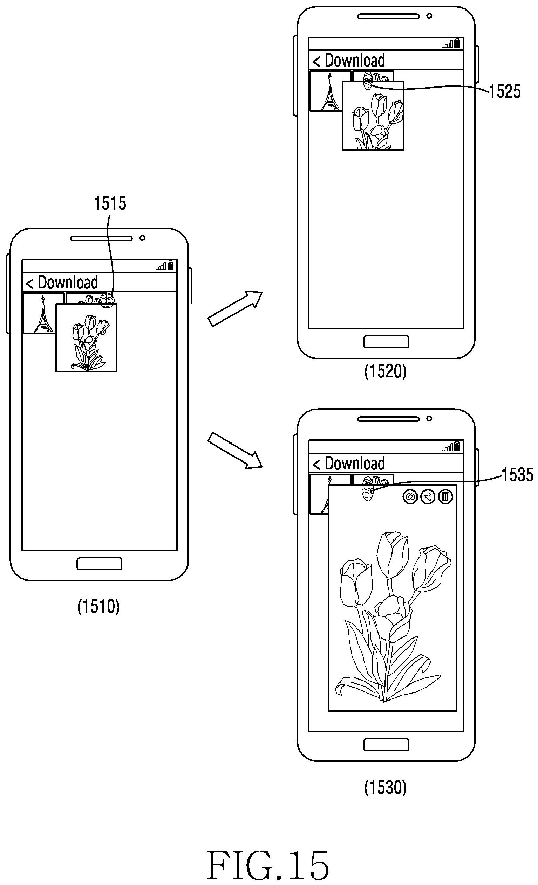

FIG. 15 is a view illustrating an example of controlling a user interface according to the operating method of FIG. 14.

Referring to FIG. 15, a first user interface 1510 may provide a preview image 1515 based on a force input. For example, when the force input is detected while a touch input is being held, the processor 120 may display the preview image 1515 regarding an image corresponding to the touch input. For example, the preview image 1515 may be an image that is selected from a plurality of images provided in a gallery application and is slightly enlarged. The preview image 1515 may be different from an image that is provided based on a touch input for selecting any one of the plurality of images. When the image is selected (for example, a touch input), the processor 120 may display the selected image on a substantially entire region of the display (for example, the display 430). However, when the force input is detected while the touch input is being held, the processor 120 may display the preview image 1515 which is a slightly larger image of the image corresponding to the touch input.

A second user interface 1520 may provide a second preview image 1525 based on a change of the force input. For example, the processor 120 may display the second preview image 1525 which is a result of zooming in the preview image 1515 based on a change of the force input detected over the preview image 1515. The second preview image 1525 is a result of zooming in a part of the preview image 1515 with reference to the position of the detected force input. The size of the second preview image 1525 may be the same as the size of the preview image 1515.

A third user interface 1530 may provide a third preview image 1535 based on a change of the force input. For example, the processor 120 may display the third preview image 1535 which is larger than the size of the preview image 1515, based on a change of the force input detected over the preview image 1515. The size of the third preview image 1535 may be larger than the size of the preview image 1515 or the size of the second preview image 1525.

According to various embodiments, when the force input is released after the function is performed based on the change of the force input, the electronic device 101 (for example, the processor 120) may perform various functions. For example, when one function is selected based on the change of the force input and the force input is released, the processor 120 may maintain a function performing screen. That is, a selected function is performed after a touch is released in a related-art device, but in the present embodiment, a changed screen (enlarged screen) may be maintained when the force input is released.

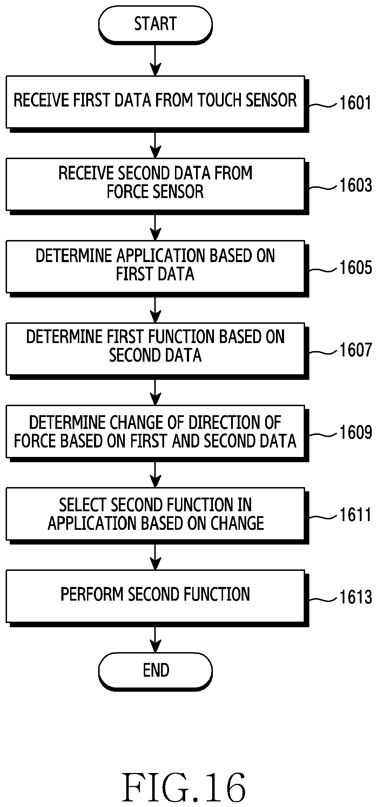

FIG. 16 is a flowchart illustrating a method for providing a user interface in the electronic device according to various embodiments.

Referring to FIG. 16, in operation 1601, the electronic device 101 (for example, the processor 120) may receive first data from the touch sensor 420. In operation 1603, the electronic device 101 (for example, the processor 120) may receive second data from the force sensor 440. In operation 1605, the electronic device 101 (for example, the processor 120) may determine an application based on the first data. Since operations 1601 to 1605 are the same as or similar to operations 1201 to 1205 of FIG. 12, a detailed description thereof is omitted.

In operation 1607, the electronic device 101 (for example, the processor 120) may determine a first function based on the second data. When the second data is detected over an icon associated with an application similarly to the first data, the processor 120 may determine a function of executing the application corresponding to the icon in the form of preview as the first function. Executing in the form of preview may be distinguished from executing the application according to the touch input. For example, when the application is executed according to the touch input, the processor 120 may display the screen of the executed application on a substantially entire region of the display 430. When the application is executed in the form of preview according to the second data, the processor 120 may display the screen of the executed application on a certain region of the display 430.

In operation 1609, the electronic device 101 (for example, the processor 120) may determine a change of a direction of the force based on the first data and the second data. Since operation 1609 is the same as or similar to operation 1207 of FIG. 12, a detailed description thereof is omitted.

In operation 1611, the electronic device 101 (for example, the processor 120) may select a second function in the application based on the change. For example, the processor 120 may identify functions which are executable in the application, and may select any one of the identified functions based on the change.

In operation 1613, the electronic device 101 (for example, the processor 120) may perform the second function. For example, when the application executed in the form of preview is a camera application, the processor 120 may photograph an image displayed on the camera application executed in the form of preview.

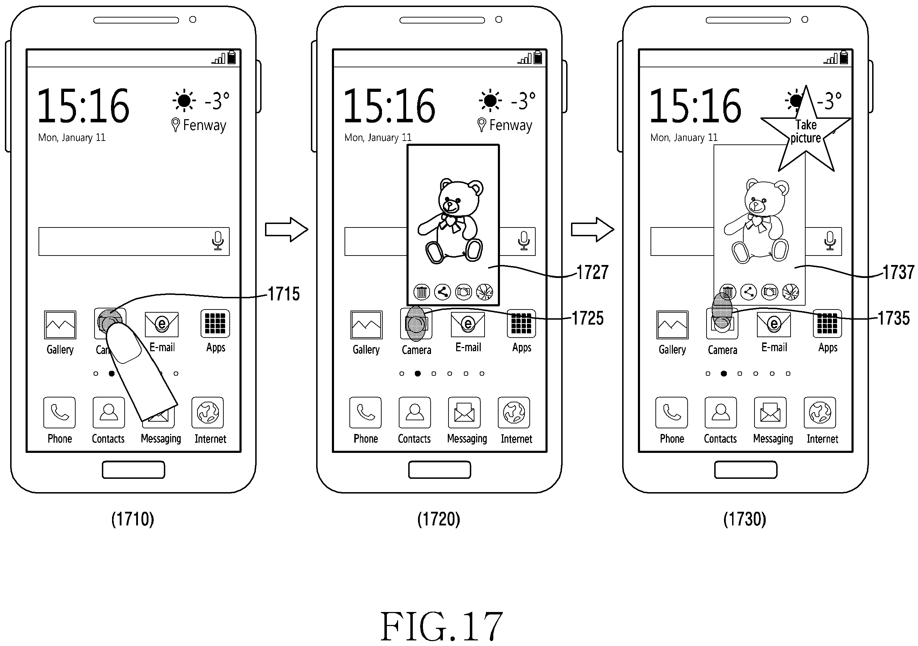

FIG. 17 is a view illustrating an example of controlling a user interface according to the operating method of FIG. 16.

Referring to FIG. 17, the processor 120 may display a first user interface 1710. The processor 120 may detect a touch input 1715 on the first user interface 1710, and may determine a camera application based on the touch input 1715. The processor 120 may detect a force input 1725 while the touch input 1715 is being held. A detection position of the force input 1725 may be the same as or similar to the detection position of the touch input 1715. The processor 120 may display a second user interface 1720 based on the force input 1725. The second user interface 1720 may display the camera application being executed in the form of preview based on the force input 1725.

For example, the second user interface 1720 may include an execution screen 1727 of the camera application displayed on a certain region of the display 430 in the form of preview. The execution screen 1727 of the camera application may display an image (for example, teddy bear) photographed through the camera module 291. The processor 120 may display a third user interface 1730 based on a change 1735 of the force input. The third user interface 1730 may be to photograph the image 1737 displayed through the execution screen of the camera application in the form of preview. The photographed image 1737 may be stored in the memory 130. The change 1735 of the force input may refer to a change of at least one of a position, an intensity, an area, or a shape of the force input.

According to various embodiments, when the force input is detected while the touch input is being held, the electronic device 101 (for example, the processor 120) may additionally generate and arrange an additionally photographed photo or video on the position where the force input is detected, as an object. The processor 120 may scroll the object based on a change of the force input. When the force input is released, the processor 120 may make the photo or video provided as the object disappear, and may delete the arranged object.

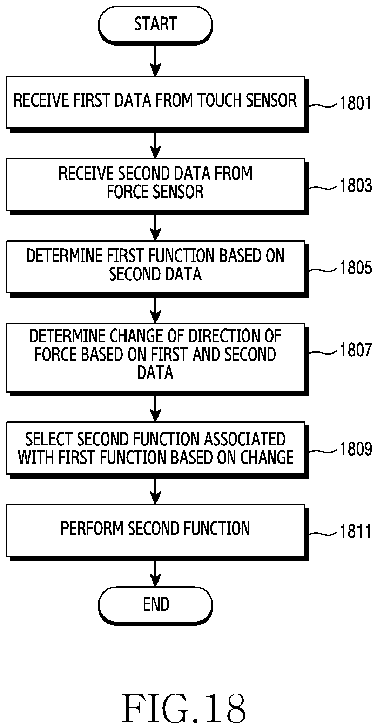

FIG. 18 is a flowchart illustrating a method for providing a user interface in the electronic device according to various embodiments.

Referring to FIG. 18, in operation 1801, the electronic device 101 (for example, the processor 120) may receive first data from the touch sensor 420. In operation 1803, the electronic device 101 (for example, the processor 120) may receive second data from the force sensor 440. Since operations 1801 and 1803 are the same as or similar to operations 1201 and 1203 of FIG. 12, a detailed description thereof is omitted.

In operation 1805, the electronic device 101 (for example, the processor 120) may determine a first function based on the second data. For example, when the first data and the second data are received on a locked screen, the processor 120 may determine whether an image set on the locked screen is movable. When the image is movable, the image may be a motion panorama or a 350-degree rotatable image. When the image set on the locked screen is movable, the processor 120 may determine a function of reproducing the image as the first function.

In operation 1807, the electronic device 101 (for example, the processor 120) may determine a change of a direction of the force based on the first data and the second data. The change of the direction of the force may refer to a change of at least one of a position, an intensity, an area, or a shape of the second data.

In operation 1809, the electronic device 101 (for example, the processor 120) may select a second function associated with the first function based on the change. For example, the change of the direction of the force may be a movement in the horizontal direction, that is, to the left and the right, with reference to a front surface of the display 430, or a movement in the vertical direction, that is, up and down. Alternatively, the change of the direction of the force may be an intensity of the force. The second function may be moving the reproduced image.

In operation 1811, the electronic device 101 (for example, the processor 120) may perform the selected second function. For example, the processor 120 may move the reproduced image up, down, left, or right based on the change.

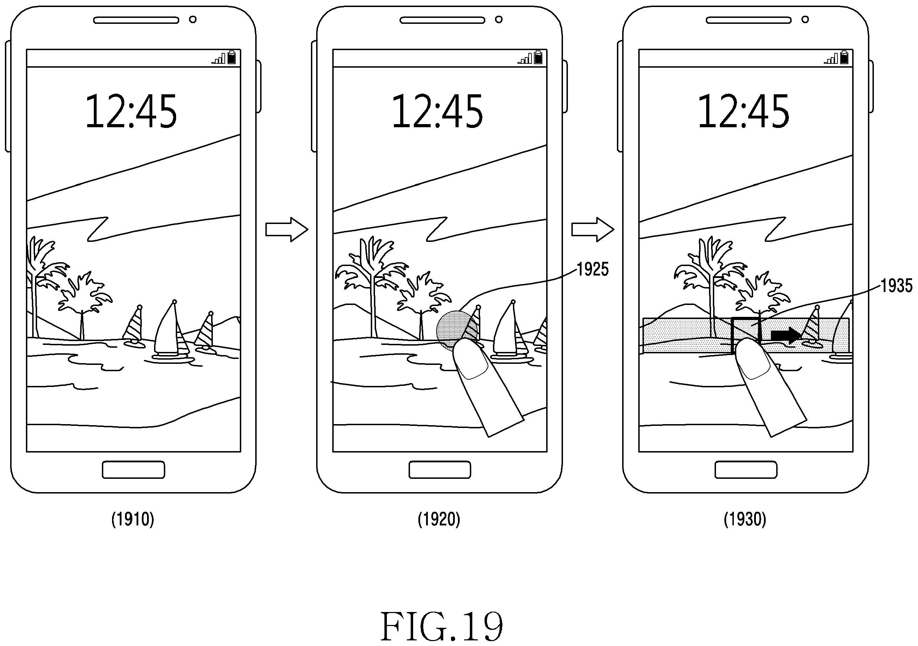

FIG. 19 is a view illustrating an example of controlling a user interface according to the operating method of FIG. 18.

Referring to FIG. 19, a first user interface 1910 may display a locked screen of the electronic device 101. The processor 120 may determine whether a force input is detected while a touch input is being detected on the first user interface 1910. When the force input is detected, the processor 120 may display a second user interface 1920. The second user interface 1920 may be reproducing an image set on the locked screen according to the detected force input 1925. The processor 120 may display a third user interface 1930 based on a change 1935 of the force input. The third user interface 1930 may be moving the reproduced image up, down, left, or right based on the change 1935 of the force input.

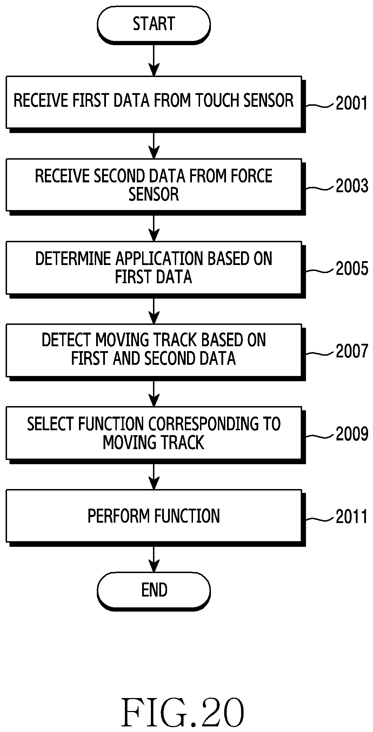

FIG. 20 is a flowchart illustrating a method for providing a user interface in the electronic device according to various embodiments.

Referring to FIG. 20, in operation 2001, the electronic device 101 (for example, the processor 120) may receive first data from the touch sensor 420. In operation 2003, the electronic device 101 (for example, the processor 120) may receive second data from the force sensor 440. In operation 2005, the electronic device 101 (for example, the processor 120) may determine an application based on the first data. Since operations 2001 to 2005 are the same as or similar to operations 1201 to 1205 of FIG. 12, a detailed description thereof is omitted.

In operation 2007, the electronic device 101 (for example, the processor 120) may detect a moving track based on the first data and the second data. For example, the moving track is a change of the position of the force of the second data of the first data according to time, and may have a predetermined shape (for example, a triangle, a rectangle, a star).

In operation 2009, the electronic device 101 (for example, the processor 120) may determine a function corresponding to the moving track. For example, when the moving track has a star shape, the function may be executing a telephone application determined based on the first data. Alternatively, when the moving track is a triangle, the function may be calling a number of a person included in a recent list in the telephone application determined based on the first data. Alternatively, when the moving track is a rectangle, the function may be calling a specified number of the telephone application determined based on the first data.

In operation 2011, the electronic device 101 (for example, the processor 120) may perform the selected function. For example, the processor 120 may execute the executed telephone application, or may call the number of the person included in the recent list in the telephone application, or the specified number.

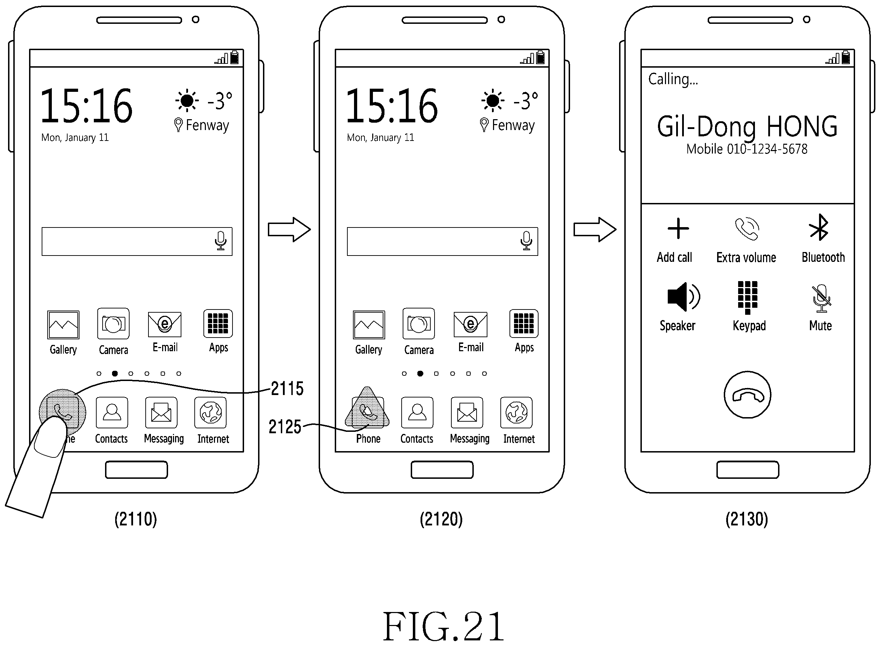

FIG. 21 is a view illustrating an example of controlling a user interface according to the operating method of FIG. 20.

Referring to FIG. 21, a first user interface 2110 may be a home screen of the electronic device 101. The processor 120 may determine whether a force input 2115 is detected while a touch input is being detected on the first user interface 2110. The touch input and the force input may be detected on a telephone application. When the force input is detected, the processor 120 may display a second user interface 2120. The processor 120 may detect a moving track 2125 of the force input on the second user interface 2120. The moving track 2125 may be, for example, a triangle. The processor 120 may display a third user interface 2130 based on the moving track 2125. The third user interface 2130 may be a screen which executes the telephone application in response to the moving track 2125, and calls a specified number (for example, Gil-dong HONG, 010-1234-5678).

According to various embodiments, an operating method of an electronic device including a touch sensor and a force sensor may include: detecting a force input while detecting a touch input; monitoring an amount of change of the force input; detecting a change of an input based on the amount of change; when the change of the input is detected, operating in a force change processing mode; and displaying a user interface associated with the force change processing mode.

The change of the input may be a change of at least one of a position, an intensity, an area, or a shape of the force input.

The monitoring may include, when the force input is detected in the proximity of a detection position of the touch input, synchronizing the touch input and the force input.

A region of the force input and a region of the change of the input may overlap each other in part.

The change of the direction may be distinguished from a touch drag.

An amount of change of a position related to the change of the direction may be smaller than an amount of change of a position caused by the touch drag.

The change of the direction may be a change of distribution of intensities of the force.

The electronic device may include a first layer for detecting a touch input, and a second layer for detecting a force input may be implemented, and the operating method may further include detecting a change of a position of the force input based on a change of coordinates on the first layer.

According to various embodiments, a computer-readable recording medium may include a program for executing the operations of: detecting a force input while detecting a touch input; monitoring an amount of change of the force input; detecting a change of an input based on the amount of change; when the change of the input is detected, operating in a force change processing mode; and displaying a user interface associated with the force change processing mode.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa. Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

Various embodiments disclosed herein are provided merely to easily describe technical details of the present disclosure and to help the understanding of the present disclosure, and are not intended to limit the scope of the present disclosure. Therefore, it should be understood that all modifications and changes or modified and changed forms based on the technical idea of the present disclosure fall within the scope of the present disclosure.

## Claims

1. An electronic device comprising:
a housing comprising a first surface facing a first direction, and a second surface facing a second direction opposite the first direction;
a display arranged between the first surface and the second surface, and exposed through the first surface;
a touch sensor arranged between the first surface and the second surface, and configured to detect a point of at least one touch by an external object on the display;
a force sensor arranged between the first surface and the second surface, and configured to detect a force applied against the display by the external object;
at least one processor electrically connected with the display, the touch sensor, and the force sensor; and
a memory electrically connected with the processor and configured to store a plurality of application programs comprising a plurality of functions, respectively,
wherein the memory is configured to store instructions that, when executed, cause the processor to:
display a user interface on the display;
receive, from the touch sensor, first data indicating that the external object touches a part of the display;
receive, from the force sensor, second data indicating a force applied against the display by the external object while the external object is touching a part of the display;
determine at least one application based at least in part on the first data,
determine a change of a direction of the force applied against the display by the external object, based on at least part of the first data or the second data, the direction being perpendicular to the first direction;
select a function associated with the at least one application based on at least part of the change; and
perform the selected function.

2. The electronic device of claim 1, wherein the instructions cause the processor to:
determine a first function based on at least part of the first data;
select a second function associated with the first function based on at least part of the change; and
perform the selected function.

3. The electronic device of claim 1, wherein the instructions cause the processor to:
determine a first function associated with the at least one application based on at least part of the second data;
select a second function associated with the application based on at least part of the change; and
perform the selected function.

4. The electronic device of claim 1, wherein the instructions cause the processor to:
detect a moving track based on at least part of the first data;
determine a function corresponding to the moving track based on at least part of the change; and
perform the determined function.

5. The electronic device of claim 1, wherein the change of the direction is a change of at least one of a position, an intensity, an area, or a shape of the force.

6. The electronic device of claim 1, wherein the instructions cause the processor to synchronize the first data and the second data when the second data is detected in the proximity of a detection position of the first data.

7. The electronic device of claim 1, wherein an input region of the second data and an input region of the change of the direction overlap each other in part.

8. The electronic device of claim 1, wherein the change of the direction is distinguished from a touch drag.

9. The electronic device of claim 8, wherein an amount of change of a position related to the change of the direction is smaller than an amount of change of a position caused by the touch drag.

10. The electronic device of claim 1, wherein the instructions cause the processor to operate in a force change processing mode and to provide a user interface related to the force change processing mode when the change of the direction of the force applied against the display by the external object is detected.

11. The electronic device of claim 1, wherein a first layer for detecting a touch input, and a second layer for detecting a force input are implemented, and the instructions cause the processor to detect a change of a position of the force input based on a change of coordinates on the first layer.

12. An operating method of an electronic device comprising a touch sensor and a force sensor, the method comprising:
detecting a force input while detecting a touch input;
monitoring an amount of change of the force input;
detecting a change of an input based on the amount of change;
when the change of the input is detected, operating in a force change processing mode; and
displaying a user interface associated with the force change processing mode.

13. The method of claim 12, wherein the change of the input is a change of at least one of a position, an intensity, an area, or a shape of the force input.

14. The method of claim 12, wherein the monitoring comprises, when the force input is detected in the proximity of a detection position of the touch input, synchronizing the touch input and the force input.

15. The method of claim 12, wherein a region of the force input and a region of the change of the input overlap each other in part.
